(19) **Europäisches Patentamt**
**European Patent Office**
**Office européen des brevets**

(11) **EP 2 028 540 A1**

(12) **EUROPEAN PATENT APPLICATION**
published in accordance with Art. 153(4) EPC

(43) Date of publication:
**25.02.2009 Bulletin 2009/09**

(51) Int Cl.:
***G03B 5/00*** *(2006.01)*

(21) Application number: **07743095.7**

(86) International application number:
**PCT/JP2007/059660**

(22) Date of filing: **10.05.2007**

(87) International publication number:
**WO 2007/132730 (22.11.2007 Gazette 2007/47)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **12.05.2006 JP 2006134504**
**12.05.2006 JP 2006134506**
**12.05.2006 JP 2006134510**

(71) Applicant: **Victor Company Of Japan, Limited Kanagawa-ku Yokohama-shi Kanagawa 221-8528 (JP)**

(72) Inventor: **OTAKE, Yoshichi**

**(JP)**

(74) Representative: **Emde, Eric Wagner & Geyer, Gewürzmühlstrasse 5 80538 München (DE)**

(54) **IMAGE BLUR CORRECTING DEVICE**

(57) An image fluctuation correction device comprises shake detecting means 5 for detecting shake, movable refraction elements 10A, 10B, two rotating means 4A, 4B for rotating the movable refraction elements 10A, 10B, rotating control amount calculating means 6A for calculating the rotating control amount of the two rotating means 4A, 4B, rotating control means 6B for controlling the two rotating means 4A, 4B according to the rotating control amount, rotating amount detecting means 8A, 8B for detecting the rotating amounts of the movable refraction elements 10A, 10B, reverse rotating control means 6C for calculating the reverse rotating control amounts and controlling the two rotating means 4A, 4B according to the reverse rotating control amounts, and camera shake control switching means 6D for transmitting a reverse rotating control start signal to the reverse rotating control means 6C when the camera shake control switching means 6D judges that the rotating amount reaches a rotating limit amount and a camera shake control start signal to the rotating control means 6B when the camera shake control switching means 6D judges that the rotating control amount agrees with the rotating control amount computed immediately before.

FIG. 1

EP 2 028 540 A1

**Description**

**TECHNICAL FIELD**

The present invention relates to an image fluctuation correction device that controls a moving amount of a movable refraction element within its movable range appropriately when correcting the fluctuation of an image.

**BACKGORUND OF ART**

Patent Document No. 1 (Japanese Patent Publication Laid-open No. 9-51469) has proposed an image fluctuation correction device that detects a shake of an imaging equipment having, as a movable refraction element, a lens comprising two sheets of glass plates connected to each other through a bellows and liquid charged between the glass plates, and that changes an inclination angle of the movable refraction element corresponding to the detected shake of the imaging equipment thereby to correct the fluctuation of an image.

In this image fluctuation correction device, the larger the movable range of the movable refraction element gets, the less the image fluctuation correction is subject to the magnitude of image fluctuation or the initial position of the movable refraction element, so that the degree of freedom in controlling the movable refraction element grows larger.

In order to increase the movable range of the movable refraction element, however, it is necessary to make the movable refraction element larger, causing a problem that the whole imaging device is large-sized.

In addition, since the refraction angle of incident light is increased as the moving amount of the movable refraction element from its initial position gets larger, the image shift of taken images due to chromatic aberration gets larger. It is thus desirable from these viewpoints that the movable range of the movable refraction element is small.

Meanwhile, if the movable range of the movable refraction element is established small, then the moving amount of the movable refraction element required to correct the fluctuation of an image exceeds the established movable range, so that it becomes impossible to correct the fluctuation of the image appropriately.

Patent Document No. 2 (Japanese Patent Publication No. 2752115) therefore proposes an image displacing device that positions a movable refraction element moving an image on an imaging plane in an initial position for starting the moving of the element and that further alters the initial position for starting the moving of the element, which has been established by an external manipulation etc., during controlling of a hand shake correction.

**DISCLOSURE OF THE INVENTION**

However, this image displacing device is constructed so as to establish the movable refraction element for moving the image on the imaging plane in the initial position for starting the moving of the element and also alter the initial position for starting the moving of the element, which has been established by an external manipulation etc., during the hand shake correction control, the oscillation center of a moving amount of the movable refraction element required to correct the fluctuation of the image does not always agree with the center of a movable range of the movable refraction element

Consequently, the moving amount of the movable refraction element required to correct the fluctuation of the image is biased toward an upper limit of the movable range of the movable refraction element or the lower limit, it is difficult to control the moving amount of the movable refraction element so as not to exceed the movable range.

In consideration of the above-mentioned problem, an object of the present invention is to provide an image fluctuation correction device capable of appropriately controlling the moving amount of the movable refraction element within the movable range when correcting the fluctuation of an image.

According to a first aspect of the present invention, there is provided an image fluctuation correction device that corrects a fluctuation of an image caused by an on-camera shake of an imaging equipment having an optical lens, the image fluctuation correction device comprising: shake detecting means for detecting a shake generated in the imaging equipment; image moving means for moving an image brought by light being incident on the optical lens; driving means for driving the image moving means; control amount calculating means for calculating a control amount to drive the driving means so as to cancel the shake detected by the shake detecting means; control means for controlling the driving means based on the control amount calculated by the control amount calculating means; driving amount detecting means for detecting a driving amount of the image moving means; reverse rotating control means that computes a reverse rotating control amount by subtracting a difference between the control amount and a control limit amount representing a control amount of the image moving means at its movable limit from the control limit amount, and controls the driving means based on the reverse rotating control amount; and control switching means that transmits a reverse rotating control start signal to the reverse rotating control means thereby to start a reverse rotating control of the driving means when judging that the driving amount detected by the driving amount detecting means has reached the control limit amount, and that transmits a hand shake control start signal to the control means thereby to start a control of the driving means when judging, while the driving means is controlled by the reverse rotating control means, that the control amount calculated by the control amount calculating means has agreed with a control amount calculated immediately before.

According to a second aspect of the present invention, there is provided an image fluctuation correction device that corrects a fluctuation of an image caused by an on-camera shake of an imaging equipment having an optical lens, the image fluctuation correction device comprising: shake detecting means for detecting a shake generated in the imaging equipment; two movable refraction elements arranged on an incident light path toward the optical lens to change a refracting direction of light being incident on the optical lens; two rotating means for rotating the two movable refraction elements about an optical axis respectively; rotating control amount calculating means for calculating rotating control amounts of the two rotating means so as to cancel the shake detected by the shake detecting means; rotating control means for controlling the two rotating means based on the rotating control amounts calculated by the rotating control amount calculating means; rotating amount detecting means for detecting rotating amounts of the two movable refraction elements; reverse rotating control means that computes reverse rotating control amounts by subtracting differences between the rotating control amounts and rotating limit amounts representing rotating amounts of the two movable refraction elements at their movable limits from the rotating limit amounts, and controls the two rotating means based on the reverse rotating control amounts; and control switching means that transmits a reverse rotating control start signal to the reverse rotating control means thereby to start a reverse rotating control of the rotating means when judging that the rotating amounts detected by the rotating amount detecting means have reached the rotating limit amounts, and that transmits a hand shake control start signal to the rotating control means thereby to start a control of the rotating means when judging, while the two rotating means are controlled by the reverse rotating control means, that the rotating control amounts calculated by the rotating control amount calculating means have agreed with rotating control amounts calculated immediately before.

According to a third aspect of the present invention, there is provided an image fluctuation correction device that corrects a fluctuation of an image caused by an on-camera shake of an imaging equipment having an optical lens, the image fluctuation correction device comprising: shake detecting means for detecting a shake generated in the imaging equipment; image moving means for moving an image brought by light being incident on the optical lens; driving means for driving the image moving means; control amount calculating means for calculating a control amount to drive the driving means so as to cancel the shake detected by the shake detecting means; control means for controlling the driving means based on the control amount calculated by the control amount calculating means; driving amount detecting means for detecting a driving amount of the image moving means; initial control means that calculates a control-amount start set value based on an amplitude of the control amount in a predetermined period calculated by the control amount calculating means, and initially controls the driving means so that the driving amount detected by the driving amount detecting means becomes equal to the control-amount start set value; and hand shake control starting means that transmits an initial control start signal to the initial control means thereby to start an initial control of the driving means after receiving a hand shake correction start command signal by an external manipulation, and that transmits a hand shake control start signal to the control means thereby to start a control of the driving means when the control amount calculated by the control amount calculating means becomes equal to the control-amount start set value calculated by the initial control means.

According to a fourth aspect of the present invention, there is provided an image fluctuation correction device that corrects a fluctuation of an image caused by an on-camera shake of an imaging equipment having an optical lens, the image fluctuation correction device comprising: shake detecting means for detecting a shake generated in the imaging equipment; two movable refraction elements arranged on an incident light path toward the optical lens to change a refracting direction of light being incident on the optical lens; two rotating means for rotating the two movable refraction elements about an optical axis respectively; rotating control amount calculating means for calculating rotating control amounts of the two rotating means so as to cancel the shake detected by the shake detecting means; rotating control means for controlling the two rotating means based on the rotating control amounts calculated by the rotating control amount calculating means; rotating amount detecting means for detecting rotating amounts of the two movable refraction elements; initial control means that calculates an amplitude of the rotating control amount from both maximum and minimum values of the control amount in a predetermined period calculated by the rotating control amount calculating means, multiplies a predetermined set-value amplitude multiple number by the calculated amplitude thereby to calculate a rotating-amount start set value, and initially controls the rotating means so that the rotating amounts detected by the rotating amount detecting means become equal to the rotating-amount start set value; and hand shake control starting means that transmits an initial control start signal to the initial control means thereby to start an initial control of the rotating means after receiving a hand shake correction start command signal by an external manipulation, and that transmits a hand shake control start signal to the rotating control means thereby to start a control of the rotating means when the rotating control amounts calculated by the rotating control amount calculating means become equal to the rotating-amount start set value calculated by the initial control means.

According to a fifth aspect of the present invention, there is provided an image fluctuation correction device that corrects a fluctuation of an image caused by an on-camera shake of an imaging equipment having an optical lens, the image fluctuation correction device comprising: shake detecting means for detecting a shake generated in the imaging equipment; image moving means for moving an image brought by light being incident on the optical lens; driving means for driving the image moving means; control amount calculating means for calculating a control amount to drive the driving means so as to cancel the shake detected by the shake detecting means; control means for controlling the driving means based on the control amount calculated by the control amount calculating means; driving amount detecting means for detecting a driving amount of the image moving means; and after receiving a hand shake correction start command signal by an external manipulation, hand shake control starting means that transmits a hand shake control start signal to the control means thereby to start a control of the driving means when an absolute value of a difference between the driving amount detected by the driving amount detecting means and the control amount calculated by the control amount calculating means is within a predetermined range or when the absolute value of the difference between the driving amount and the control amount becomes minimum.

According to a sixth aspect of the present invention, there is provided an image fluctuation correction device that corrects a fluctuation of an image caused by an on-camera shake of an imaging equipment having an optical lens, the image fluctuation correction device comprising: shake detecting means for detecting a shake generated in the imaging equipment; two movable refraction elements arranged on an incident light path toward the optical lens to change a refracting direction of light being incident on the optical lens; two rotating means for rotating the two movable refraction elements about an optical axis respectively; rotating control amount calculating means for calculating rotating control amounts of the two rotating means so as to cancel the shake detected by the shake detecting means; rotating control means for controlling the two rotating means based on the rotating control amounts calculated by the rotating control amount calculating means; rotating amount detecting means for detecting rotating amounts of the two movable refraction elements; and hand shake control starting means that receives a hand shake correction start command signal by an external manipulation and then transmits a hand shake control start signal to the rotating control means thereby to start a control of the two rotating means when the rotating amounts detected by the rotating amount detecting means agree with the rotating control amounts calculated by the rotating control amount calculating means or when absolute values of differences between the rotating amounts and the rotating control amounts become minimum.

According to a seventh aspect of the present invention, there is provided an image fluctuation correction device that corrects a fluctuation of an image caused by an on-camera shake of an imaging equipment having an optical lens, the image fluctuation correction device comprising: shake detecting means for detecting a shake generated in the imaging equipment; two movable refraction elements arranged on an incident light path toward the optical lens to change a refracting direction of light being incident on the optical lens; two rotating means for rotating the two movable refraction elements about an optical axis respectively; rotating control amount calculating means for calculating rotating control amounts of the two rotating means so as to cancel the shake detected by the shake detecting means; rotating control means for controlling the two rotating means based on the rotating control amounts calculated by the rotating control amount calculating means; rotating amount detecting means for detecting rotating amounts of the two movable refraction elements; and hand shake control starting means that receives a hand shake correction start command signal by an external manipulation and then transmits a hand shake control start signal to the rotating control means thereby to start a control of the two rotating means when absolute values of differences between the rotating amounts detected by the rotating amount detecting means and the rotating control amounts calculated by the rotating control amount calculating means are within a predetermined range or when the absolute values of differences between the rotating amounts and the rotating control amounts become minimum.

**BRIEF DESCRIPTION OF THE DRAWINGS**

[Fig. 1] Fig. 1 is a block diagram showing the constitution of an image fluctuation correction device in accordance with a first embodiment of the present invention.

[Fig. 2] Fig. 2 includes schematic views showing a correction unit of a still image acquisition device shown in Fig. 1, in which Fig. 2(a) is a schematic front view and Fig. 2(b) is a schematic side view.

[Fig. 3] Fig. 3 includes structural views of the correction unit, in which Fig. 3(a) is a front view, Fig. 3(b) a sectional view viewed in a direction B of Fig. 2(a), and Fig. 3(c) is a sectional view viewed in a direction A of Fig. 2(a).

[Fig. 4] Fig. 4 is a perspective view of a fixed prism that the correction unit of Fig. 3 includes.

[Fig. 5] Fig. 5 includes arrangement views of actuators and sensors that the correction unit of Fig. 3 includes, in which Fig. 5(a) is a schematic side view, Fig. 5(b) an arrangement view of an actuator and a sensor of a movable prism 10A, and Fig. 5(c) is an arrangement view of an actuator and a sensor of a movable prism 10B.

[Fig. 6] Fig. 6 includes views explaining the movement of a subject image by a prism, in which Fig. 6(a) is a view explaining refraction of light by the prism and Fig. 6(b) is a view of the prism of Fig. 6(a) viewed in its front direction.

[Fig. 7] Fig. 7 is a view showing image shift vectors when movable prisms do not rotate.

[Fig. 8] Fig. 8 includes views explaining the movement of a subject image when the movable prisms rotate, in which Fig. 8(a) is a view showing the image shift vectors when the movable prisms rotate and Fig. 8(b) is a view where displacements of the image shift vectors of Fig. 8(a) are picked up.

[Fig. 9] Fig. 9 includes views showing parallel translating forms of a subject image (subject), in which Fig. 9(a) is a view of the subject image moved to a second quadrant, Fig. 9(b) a view of the subject image moved to a first quadrant, Fig. 9(c) a view of the subject image moved to a third quadrant, and Fig. 9(d) is a view of the subject image moved to a fourth quadrant.

[Fig. 10] Fig. 10 includes views explaining an equivalent focal distance and a shift surface, in which Fig. 10(a) is a view explaining the equivalent focal distance and Fig. 10(b) is a view explaining a shift amount.

[Fig. 11 ] Fig. 11 includes views explaining a hand shake correction, in which Fig. 11 (a) is a view explaining the movement of a subject image due to the hand shake and Fig. 11 (b) is a view explaining the hand shake correction.

[Fig. 12] Fig. 12 is a flow chart showing the process flow of a hand shake control of the image fluctuation correction device in accordance with the embodiment

[Fig. 13] Fig. 13 is a flow chart showing the control switching process flow of the image fluctuation correction device in accordance with the embodiment.

[Fig. 14] Fig. 14 is a flow chart showing the process flow of a reverse rotating control of the image fluctuation correction device in accordance with the embodiment

[Fig. 15] Fig. 15 includes views explaining the control switching process of the image fluctuation correction device in accordance with the embodiment.

[Fig. 16] Fig. 16 is a view showing a lens system of Fig. 1.

[Fig. 17] Fig. 17 includes views showing the arrangement of the correction unit, the lens system and the others of Fig. 1, in which Fig. 17(a) is a view showing the correction unit arranged in the lens system and Fig. 17(b) is a view showing the correction unit arranged behind the lens system.

[Fig. 18] Fig. 18 includes views showing the correction unit without a fixed prism as another constitution of the correction unit of the embodiment, in which Fig. 18(a) is a front view of the correction unit, Fig. 18(b) is a plan view of the unit, and Fig. 18(c) is a side view of the unit

[Fig. 19] Fig. 19 includes views showing the correction unit with two sheets of fixed prisms as the other constitution of the correction unit of the embodiment, in which Fig. 19(a) is a front view of the correction unit, Fig. 19(b) is a plan view of the part, and Fig. 19(c) is a side view of the part

[Fig. 20] Fig. 20 includes views showing the other constitution of the prism of the embodiment, in which Fig. 20(a) is a view showing a simplex prism, Fig. 20(b) is a view of a compound prism, and Fig. 20(c) is a view showing a parallel plate having prism effect.

[Fig. 21] Fig. 21 is a block diagram showing the constitution of an image fluctuation correction device in accordance with a second embodiment of the present invention.

[Fig. 22] Fig. 22 is a flow chart showing the process flow of the image fluctuation correction device in accordance with the embodiment.

[Fig. 23] Fig. 23 includes views explaining a hand shake control start judgment process of the image fluctuation correction device in accordance with the embodiment

[Fig. 24] Fig. 24 is a block diagram showing the constitution of an image fluctuation correction device in accordance with a third embodiment of the present invention.

[Fig. 25] Fig. 25 is a flow chart showing the process flow of the image fluctuation correction device in accordance with the embodiment.

[Fig. 26] Fig. 26 includes views explaining the hand shake control start judgment process in case of judging that rotating angles "$\alpha_{10}$", "$\alpha_{20}$" are equal to rotating angles "$\alpha_1$", "$\alpha_2$".

[Fig. 27] Fig. 27 includes views explaining the hand shake control start judgment process in case of judging that the absolute values of differences between the rotating angles "$\alpha_{10}$", "$\alpha_{20}$" and the rotating angles "$\alpha_1$", "$\alpha_2$" are minimum.

[Fig. 28] Fig. 28 includes views explaining the hand shake control start judgment process in case of judging that the absolute value of the difference between the rotating angles "$\alpha_{10}$", "$\alpha_{20}$" and the rotating angles "$\alpha_1$", "$\alpha_2$" is within a predetermined allowable range for the rotating angle.

## BEST MODE FOR CARRYING OUT THE INVENTION

<1st. Embodiment>

The first embodiment of the present invention will be described below, with reference to drawings. In this embodiment, we describe with illustration of an image fluctuation correction device that controls rotating amounts of movable prisms within their movable ranges appropriately so that the rotating amounts of the movable prisms required to correct the fluctuation of an image do not exceed the movable ranges.

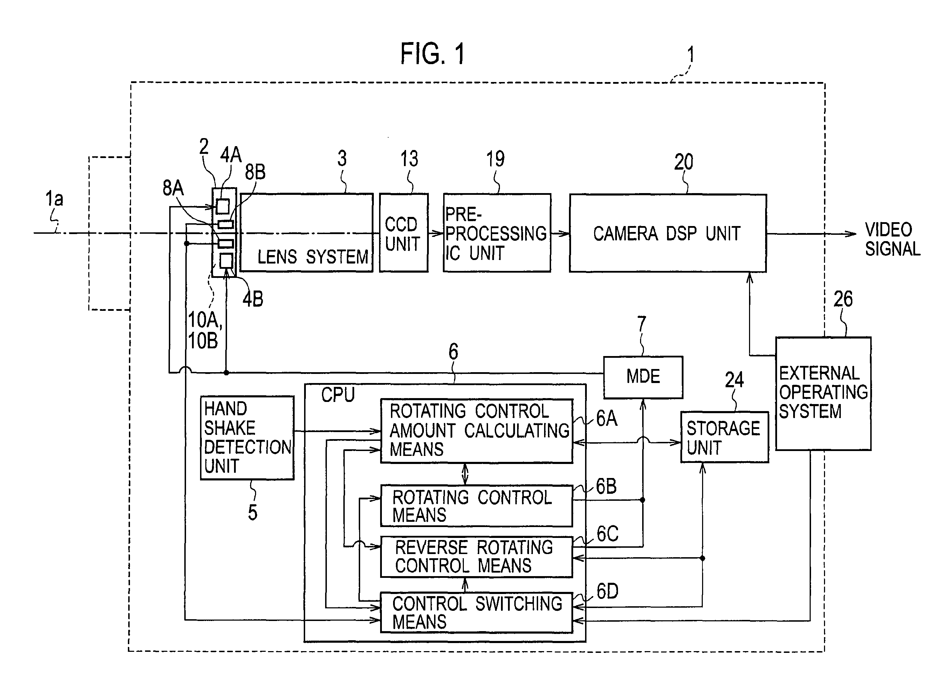

Fig. 1 is a block diagram showing an image fluctuation correction device in accordance with the first embodiment of the present invention. The image fluctuation correction device of the present invention is provided in a video camera 1 as an imaging device, for example.

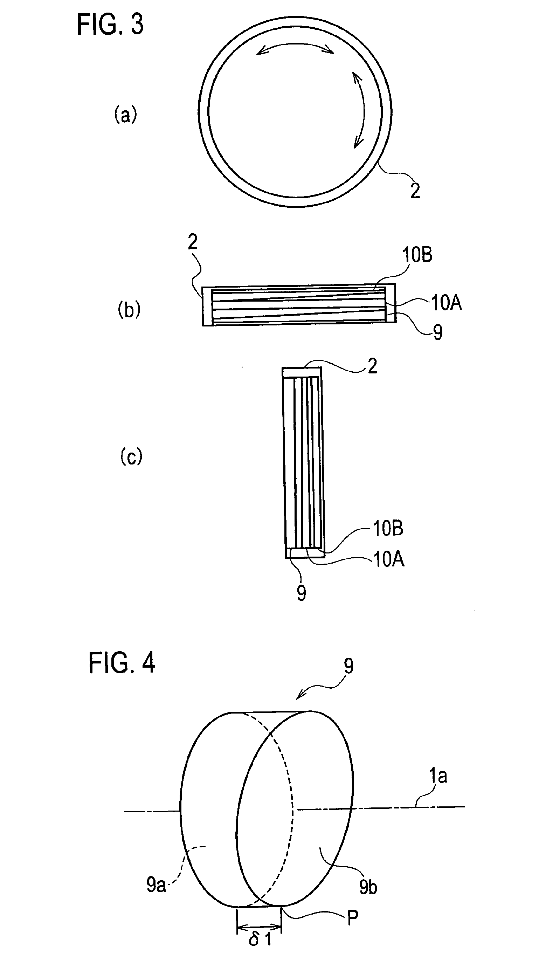

In this embodiment, the video camera 1 includes a correction unit 2 having a fixed prism 9 (Fig. 3) and a pair of movable prisms 10A, 10B independently rotatable about an optical axis 1a as a rotating center, a lens system 3 for taking pictures of a subject, a CCD unit 13 allowing incident light through the lens system 3 to form an image and also converting a so-formed subject image into electrical signals, a pre-processing IC unit 19 having CDS, AGC and A/D conversion functions, a camera DSP unit 20 applying various digitization on input signals from the pre-processing IC unit 19, actuators 4A, 4B for rotating the pair of movable prisms in the correction unit 2 respectively and independently, a hand shake detecting unit 5 for detecting a shake by an angular speed of the video camera 1 due to hand shake etc. and generating hand shake signals, a CPU 6 carrying out various controls, a motor drive electronic circuit (MDE) 7 for driving the actuators 4A, 4B in response to the control signals from the CPU 6, sensors 8A, 8B for detecting rotations of the pair of movable prisms in the correction unit 2, a storage unit 24 for storing data etc. necessary for hand shake control and an external operation system 26 including operating buttons etc.

The CPU 6 includes rotating control amount calculating means 6A for calculating respective rotating control amounts of two actuators 4A, 4B so as to cancel shake detected by the hand shake detecting unit 5, rotating control means 6B for controlling two rotating means 4A, 4B, reverse rotating control means 6C for calculating reverse rotating control amounts of the movable prisms 10A, 10B, which are obtained by subtracting differences between the rotating control amounts and rotating limit amounts from the rotating limit amounts of the prisms 10A, 10B, and controlling the actuators 4A, 4B based on the so-calculated reverse rotating control amounts, and control switching means 6D that transmits a reverse rotating control start signal to the reverse rotating control means 6C when it is judged that the rotating amounts detected by the sensors 8A, 8B reach the rotating limit amounts, and that transmits a hand shake control start signal to the rotating control means 6B when it is judged, while the actuators 4A, 4A are being controlled by the reverse rotating control means 6C, that the rotating control amounts calculated by the rotating control amount calculating means 6A agree with the rotating control amounts calculated immediately before. Note that the reverse rotating control start signal is provided to start the reverse rotating control of the actuators 4A, 4B, while the hand shake control start signal is provided to start the control of the actuators 4A, 4B.

Although the image fluctuation correction device of this embodiment includes the correction unit 2 and the CPU 6, the device has only to contain at least the rotating control amount calculating means 6A, the rotating control means 6B, the reverse rotating control means 6C and the control switching means 6D.

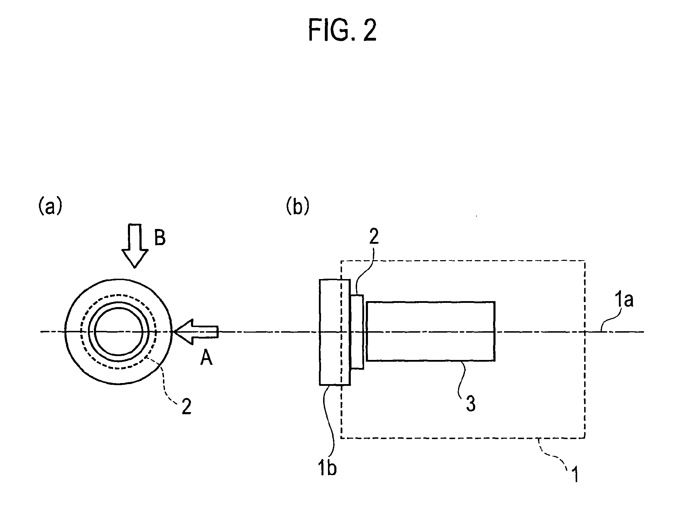

As shown in Fig. 2, the correction unit 2 is arranged between the lens system 3 and a hood part 1b covering a front face of the lens system 3. As shown in Figs. 3(a) to 3(c), the correction unit 2 includes a fixed prism 9 immovable in position and a pair of movable prisms 10A, 1 orb rotatable about the optical axis as the rotating center.

As shown in Fig. 4, the fixed prism 9 includes a first face 9a perpendicular to the optical axis 1a and a second face 9b being a flat surface opposed to the first face 9a at a minute angle slant. The fixed prism 9 is made of acryl etc. The movable prisms 10A, 10B are also similar to the prism 9 in terms of shape and material.

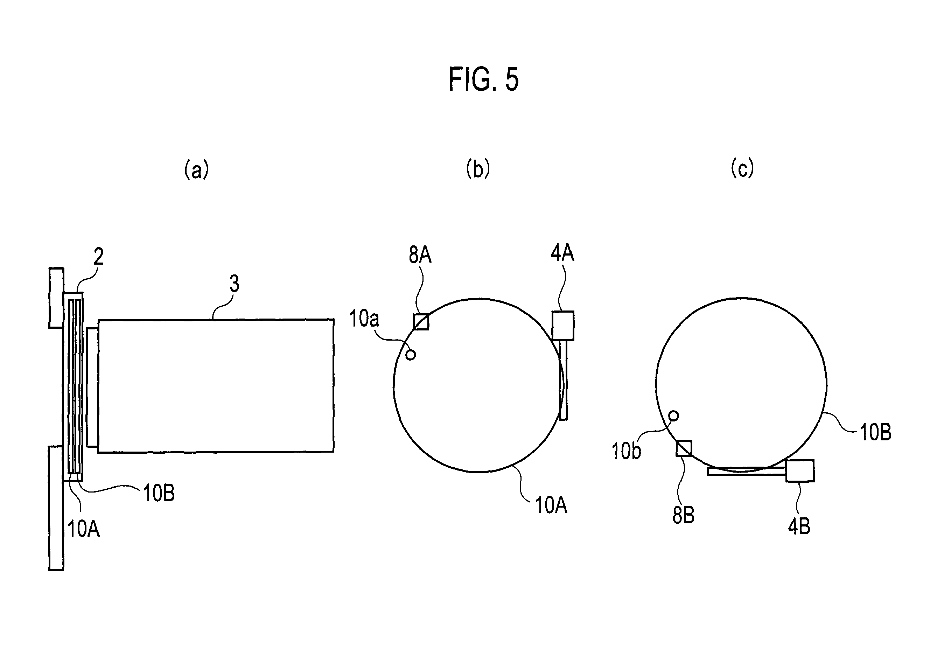

Fig. 5 includes arrangement views of actuators and sensors included in the correction unit 2 of Fig. 3. Fig. 5 (a) is a schematic side view, Fig. 5(b) an arrangement view of an actuator and a sensor of the movable prism 10A, and Fig. 5(c) is an arrangement view of an actuator and a sensor of the movable prism 10B.

The actuators and the sensors are attached to the correction unit 2. As shown in Figs. 5(b) and 5(c), the actuator 4A and the sensor 8A are provided for the movable prism 10A, while the actuator 4B and the sensor 8B are provided for the movable prism 10B.

The actuators 4A, 4B rotate the movable prisms 10A, 10B in response to the control signals from the rotation control unit 6B of the CPU 6. The actuators 4A, 4B are formed by any ones of compact pulse motors, compact linear motors, compact ultrasonic motors, etc. all of which have small load torques in common.

The sensors 8A, 8B are formed by e.g. compact photo interrupters, MR elements, hall elements or the like. In operation, the sensors 8A, 8B detect the rotating conditions of the movable prisms 10A, 10B and further output the information about the rotating conditions to the CPU 6.

If adopting the compact photo interrupters for the sensors 8A, 8B, they would be used in combination with pulse motors. The movable prisms 10A, 10B are covered, on their circumferences, with masking materials on which holes 10a, 1 0b are formed respectively. The holes 10a, 10b are positioned in a manner that when the movable prisms 10A, 10B are brought into their initial positions, the holes 10a, 1 0b accord with the sensors 8A, 8B, respectively.

The compact photo interrupter includes an infrared-emitting diode and a photo transistor. The movable prism 10A or 10B are arranged between the infrared-emitting diode and the photo transistor.

The compact photo interrupters rotate the movable prisms 10A, 10B when it is powered ON. Then, the compact photo interrupters detect the prisms' original positions since the photo transistors receive lights of the infrared-emitting diodes passing through the holes 10a, 10b. The information about each of the movable prisms 10A, 1OB in rotation could be obtained by counting the number of pulses during rotating of the prisms upon setting the number of pluses to zero at the original position.

If adopting MR elements or hall elements for the sensors 8A, 8B, magnetic bodies are attached to the movable prisms 10A, 10B respectively, instead of forming the holes 10a, 10b.

The MR elements or the hall elements detect changes in magnetic field caused by the magnetic bodies rotating together with the movable prisms 10A, 10B thereby to detect the information about the rotating condition.

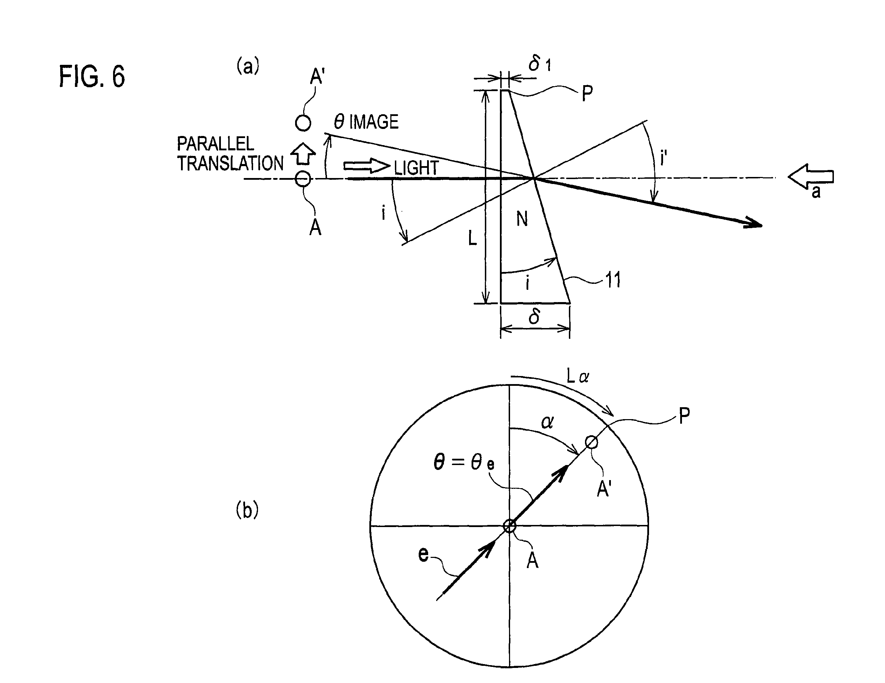

Fig. 6 includes views explaining the movement of a subject image by a prism. Fig. 6(a) is a view explaining refraction of light by the prism, while Fig. 6(b) is a view of the prism of Fig. 6(a) viewed in its front direction (arrow a). In Fig. 6(b), the prism 11 of Fig. 6(a) is rotated by an angle "$\alpha$".

As shown in Figs. 6(a) and 6(b), incident light is refracted by the prism 11 at a refraction angle "i'", so that an image of a subject "A" is shifted (of parallel translation) to a subject "A'" as a result of directing to a point "P".

In Figs. 6(a) and 6(b), "i" denotes a prism angle (incident angle of light) of the prism 11, "L" a prism length, "$\delta$" a prism height, "$\delta_1$" a prism height at the thinnest part, "N" a refraction index, "i'" a refraction angle of light, "$\theta$" an image shift angle (deflection angle), "$\alpha$" a rotation angle of the prism, "$L_\alpha$" a rotation amount of the prism, "$_{vector}e$" a unit vector in the direction of image shifting direction, and "$_{vector}\theta$" an image shift vector. Assume here that the suffix "$_{vector}$" represents a vector quantity. In Fig. 6 and the following figures, these vector quantities are represented by bold faces in place of suffix "$_{vector}$".

Here, the following relationship is established:

$$_{vector}\theta = \theta_{vector}e. \qquad (1)$$

Fig. 6(a) shows that, among the prism angle (incident angle) "i", the refraction angle "i'" and the image shift angle (deflection angle) "$\theta$", there is established:

$$\theta = i' - i. \qquad (2)$$

In addition, Snell's law leads to

$$\sin i' = N \sin i. \qquad (3)$$

Assuming now that the prism angle "i" is small, then the equation (3) can be approximated as

$$i' = N i. \qquad (4)$$

Therefore, substituting the equation (4) into the equation (2) gives

$$\theta = (N - 1) i. \qquad (5)$$

Further, Figs. 6(a) and 6(b) show that, between the rotation amount of the prism "$L_\alpha$" and the prism rotation angle "$\alpha$", there is established:

$$L_\alpha = (L/2) \alpha, \qquad (6)$$

that is,

$$\alpha = (2/L) L_\alpha. \qquad (7)$$

Furthermore, the following relationship is established as well:

$$\delta = L \tan i + \delta_1, \qquad (8)$$

that is,

$$L = (\delta - \delta_1) / \tan i. \qquad (9)$$

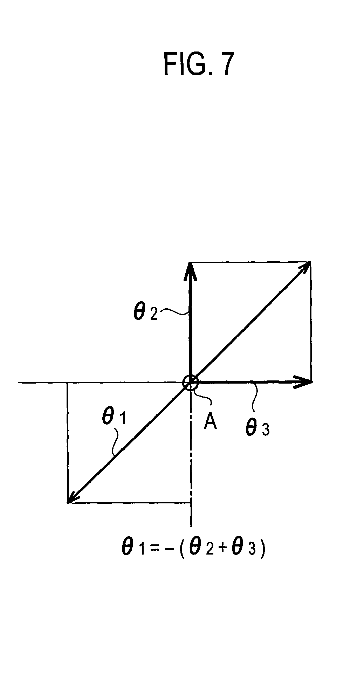

Fig. 7 is a view showing respective image shift vectors under condition that the movable prisms 10A, 10B do not rotate (in the initial state). In Fig. 7, "$_{vector}\theta_1$", "$_{vector}\theta_2$" and "$_{vector}\theta_3$" denote image shift vectors by the fixed prism 9, the movable prisms 1 0A and 1 0B, respectively.

As shown in Fig. 7, the positions of the fixed prism 9 and the movable prisms 10A, 10B are established so that "$_{vector}\theta_1$" cancels a synthetic vector of "$_{vector}\theta_2$" and "$_{vector}\theta_3$". Consequently, as the fixed prism 9 and the movable prisms 10A, 10B in three sheets become equivalent to a parallel flat plate, the incident angle on the correction unit 2 becomes equal to an emitting angle, so that a subject image does not move.

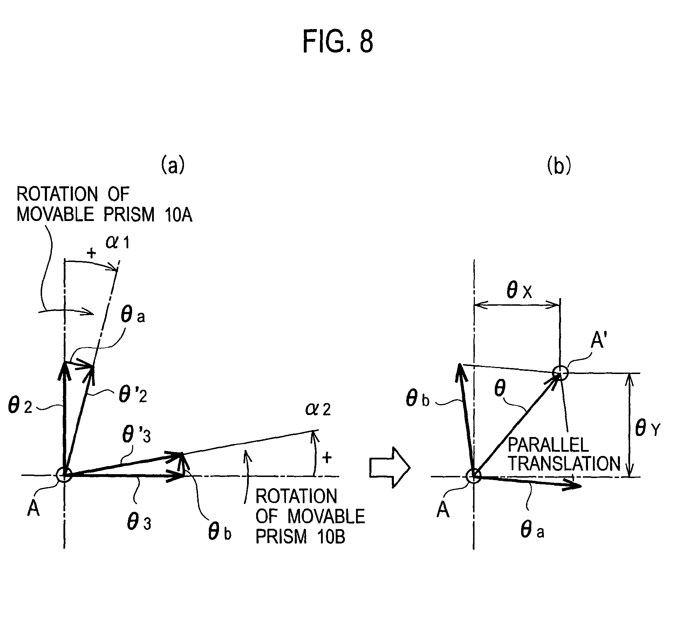

Fig. 8 includes views explaining the movements of the subject image in case that the movable prisms 10A, 10B rotate. Fig. 8(a) is a view showing the image shift vectors when the movable prisms rotate, while Fig. 8(b) is a view showing displacements of the image shift vectors of Fig. 8(a).

Assume in Fig. 8(a), "$_{vector}\theta_2$' " and "$_{vector}\theta_3$' " represent image shift vectors when the movable prisms 10A, 10B rotate by angles "$\alpha_1$" and "$\alpha_2$", respectively. It is assumed here that rotating directions shown in Fig. 8(a) are positive (+) directions of angles "$\alpha_1$" and "$\alpha_2$", respectively.

Further, it is assumed that the following relationships are established:

$$_{vector}\theta_a = {}_{vector}\theta_2{}' - {}_{vector}\theta_2, \qquad (10)$$

$$_{vector}\theta_b = {}_{vector}\theta_3{}' - {}_{vector}\theta_3. \qquad (11)$$

Consequently, as shown in Fig. 8(b), the image of the subject "A" move to "A' " in translation. Then, the image shift vector as a synthetic vector of $_{vector}\theta_a$ and $_{vector}\theta_b$ is described as

$$_{vector}\theta = {}_{vector}\theta_a + {}_{vector}\theta_b = (\theta_X, \theta_Y). \qquad (12)$$

Then, Figs. 8(a) and 8(b) shows that the following relationships are established:

$$\theta_X = \theta_2 \sin\alpha_1 - \theta_3 (1 - \cos \alpha_2), \qquad (13)$$

$$\theta_Y = \theta_3 \sin\alpha_2 - \theta_2 (1 - \cos \alpha_1), \qquad (14)$$

where, "$\theta_2$" denotes a scalar of "$_{vector}\theta_2$", while "$\theta_3$" denotes a scalar of "$_{vector}\theta_3$".
We here consider a vector having components "$\alpha_1$" and "$\alpha_2$", that is, $_{vector}\alpha = (\alpha_1, \alpha_2)$. Resolving the equations (13) and (14) with respect to "$\alpha_1$", "$\alpha_2$" gives

$$\alpha_1 = \pm \cos^{-1}(C/D) + \alpha_1^{*}, \qquad (15)$$

$$\alpha_2 = \pm \cos^{-1}\{[(\theta_X + \theta_3) - \theta_2 \sin \alpha_1]/\theta_3\}, \qquad (16)$$

where

$$C = [A^2 + B^2 + \theta_2^{\,2} - \theta_3^{\,2}]/2\theta_2, \qquad (17)$$

$$D = (A^2 + B^2)^{1/2}, \qquad (18)$$

$$\alpha_1^{*} = \pm \cos^{-1}(A/D), \quad \text{(selecting sign of B)} \quad (19)$$

$$A = (\theta_Y + \theta_2), \text{ and} \qquad (20)$$

$$B = (\theta_X + \theta_3). \qquad (21)$$

Here, if the sign of "$\alpha_1$" is minus (-), the sign of "$\theta_Y$" is selected as the sign of "$\alpha_2$". While, if the sign of "$\alpha_1$" is plus (+), the sign of plus (+) is selected as the sign of "$\alpha_2$".

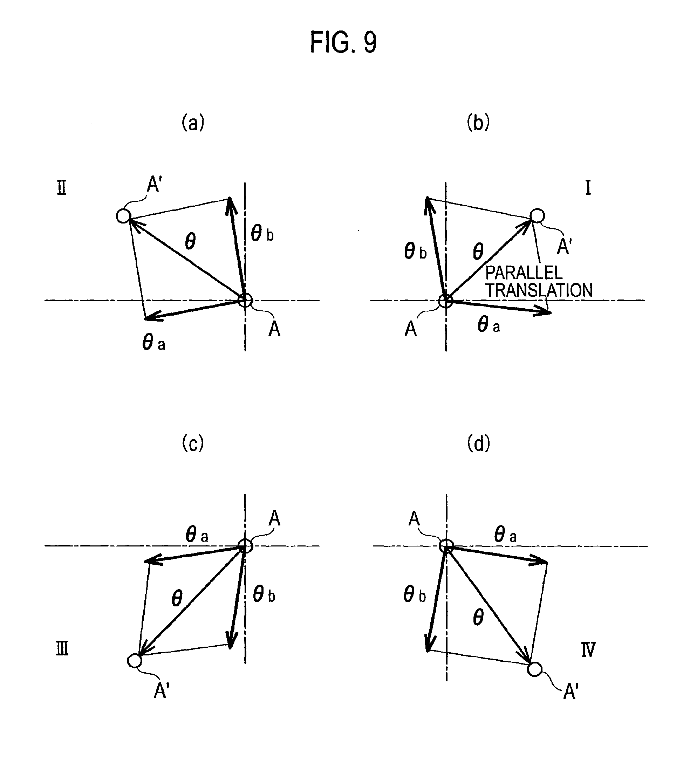

Fig. 9 includes views showing parallel translating forms of a subject image (subject). Fig. 9(a) is a view of the subject image moved to a second quadrant, Fig. 9(b) a view of the subject image moved to a first quadrant, Fig. 9(c) a view of the subject image moved to a third quadrant, and Fig. 9(d) is a view of the subject image moved to a fourth quadrant.

When the subject image moves into the first quadrant, as shown in Fig. 9(b), the inequalities $\alpha_1 > 0$ and $\alpha_2 > 0$ are established because $\theta_X > 0$ and $\theta_Y > 0$. Further, when the subject image moves into the second quadrant, as shown in Fig. 9(a), the inequalities $\alpha_1 < 0$ and $\alpha_2 > 0$ are established because $\theta_X < 0$ and $\theta_Y > 0$. Still further, when the subject image moves into the third quadrant, as shown in Fig. 9(c), the inequalities $\alpha_1 < 0$ and $\alpha_2 < 0$ are established because $\theta_X < 0$ and $\theta_Y < 0$. Again, when the subject image moves into the fourth quadrant, as shown in Fig. 9(d), the inequalities $\alpha_1 > 0$ and $\alpha_2 < 0$ are established because $\theta_X > 0$ and $\theta_Y < 0$.

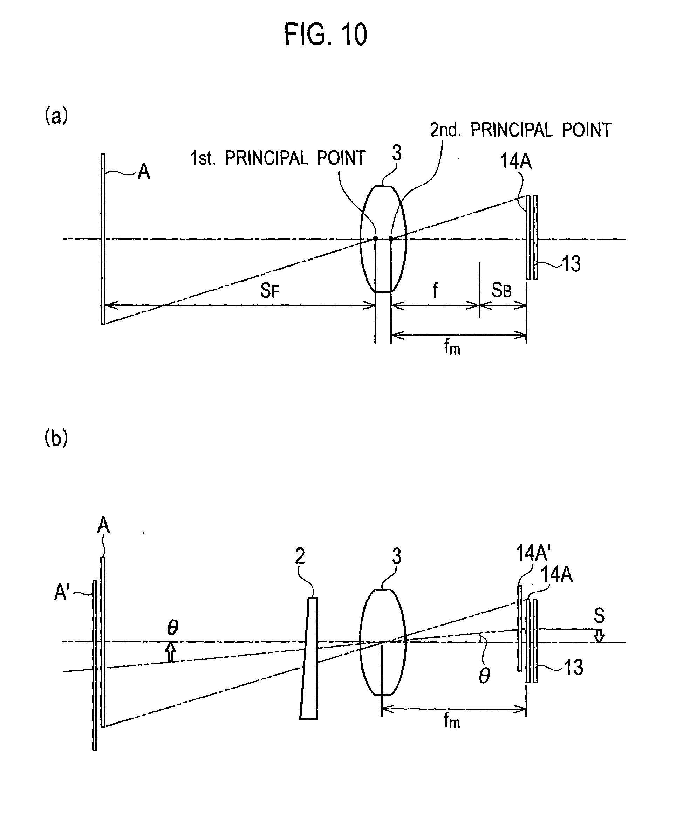

Fig. 10 includes views explaining an equivalent focal distance and a shift amount Fig. 10(a) is a view explaining the equivalent focal distance, while Fig.10(b) is a view explaining the shift amount

In Fig. 10(a), "$S_F$" denotes a distance between the subject "A" and a first principal point of the lens system 3, and "f" denotes a focal length of the lens system 3. Then, the equivalent focal distance "$f_m$" is identical to a distance between a second principal point of the lens system 3 and a CCD unit 13 for imaging a subject image 14A, and is represented by

$$f_m = f + S_B \qquad (22)$$

where

$$S_B = f^2/S_F. \qquad (23)$$

Next, as shown in Fig. 10(b), it is supposed that the correction unit 2 is inserted so that the subject image 14A is displaced to a subject image 14A' with an image shift angle "θ". Then,a shift amount "S" is expressed by

$$S = f_m \tan \theta. \qquad (24)$$

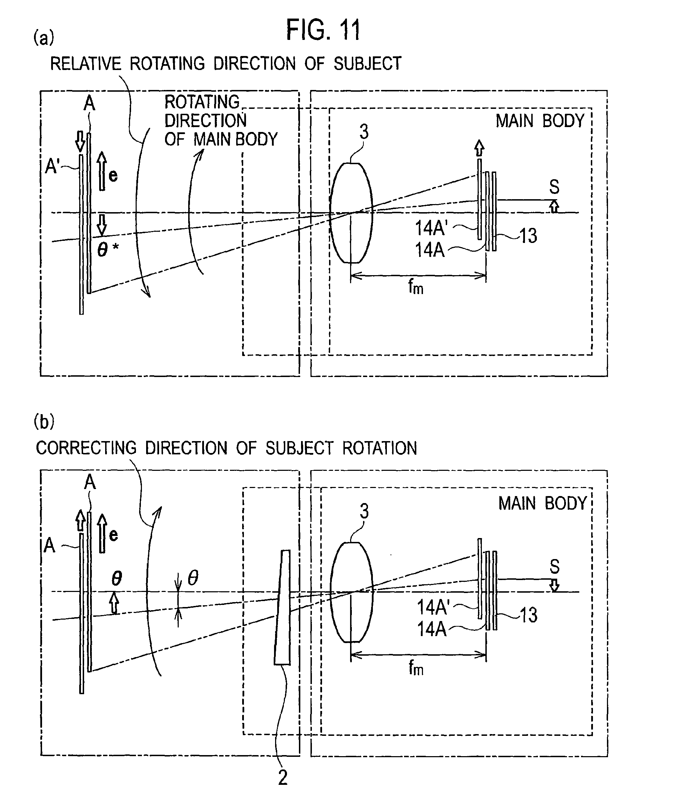

Fig. 11 includes views explaining the hand shake correction. Fig. 11(a) is a view explaining the movement of a subject image due to hand shake, while Fig. 11(b) is a view explaining the hand shake correction against the movement of the subject image due to hand shake.

As shown in Fig. 11(a), if the lens system 3 is rotated upwardly in relation to a main body, such as video camera (i.e. rotation in the clockwise direction of Fig. 11), then the subject "A" is rotated relatively downwardly (i.e. rotation in the counter-clockwise direction of Fig. 11). As a result, the subject image 14A is shifted to the subject image 14A'. Here, "$_{vector}\theta^{*}$" denotes a hand shake angle vector. Supposing a shake angle by "$\theta^{*}$" and a unit vector in the direction of hand shake by "$_{vector}e^{*}$ (= - $_{vector}e$) ", then the hand shake angle vector "$_{vector}\theta^{*}$" is expressed as

$$_{vector}\theta^{*} = \theta^{*} \cdot {}_{vector}e^{*}. \qquad (25)$$

Fig. 11(b) shows a situation in which the correction unit 2 is inserted in front of the lens system 3. Then, if the image shift vector θ and the shake-angle vector $\theta^{*}$ by the correction unit 2 satisfy with the following hand shake correcting condition:

$$_{vector}\theta = - {}_{vector}\theta^{*}, \qquad (26)$$

the subject image 14A' is moved to the position of the subject image 14A.

«Hand Shake Control»

Next, the hand shake control of the image fluctuation correction device of this embodiment will be described.

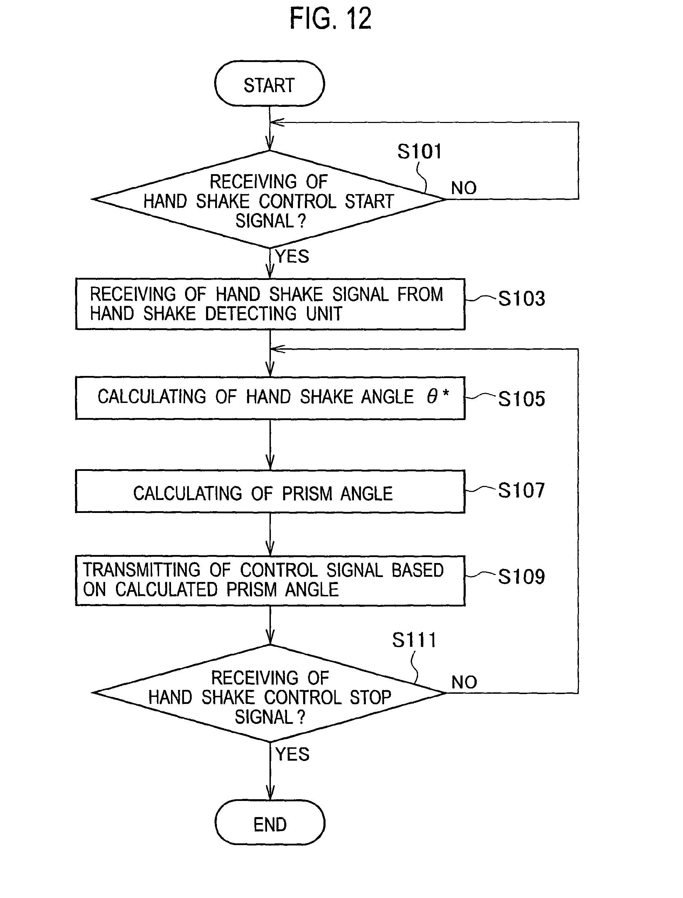

Fig. 12 is a flow chart showing the process flow of the hand shake control of the image fluctuation correction device in accordance with the embodiment

First of all, when receiving a command signal for hand shake correction start by a user's manipulating of push-buttons accepted by the external operation system 26, the control switching means 6D of the CPU 6 transmits the hand shake control start signal to the rotating control means 6B (step S101).

Then, the rotating control means 6B receiving the hand shake control start signal transmits a command of calculating a hand shake angle to the rotating control amount calculating means 6A. Then, receiving the command of calculating the hand shake angle, the rotating control amount calculating means 6A receives hand shake signals from the hand shake detecting unit 5 at predetemined intervals and calculates the hand shake angle according to the received hand shake signal (steps S105 and S107).

In detail, the hand shake detecting unit 5 detects a shake of the video camera 1 due to hand shake and outputs the detected shake to the rotating control amount calculating means 6A of the CPU 6, in the form of a hand shake signal. Based on the hand shake signal, the rotating control amount calculating means 6A of the CPU 6 calculates a hand shake angle vector "$\theta^{*}$" representing both fluctuation's magnitude and direction by

$$_{vector}\theta^{*} = ( \theta_X^{*}, \theta_Y^{*}). \qquad (27)$$

Here, using the equation (26) gives

$$( \theta_X, \theta_Y) = (- \theta_X^{*}, - \theta_Y^{*}). \qquad (28)$$

Next, based on the hand shake angle calculated at step S105, the rotating control amount calculating means 6A calculates rotating angles "$\alpha_1$", "$\alpha_2$" of the movable prisms 10A, 10B, which are required for the hand shake correction, by the equations (15) to (21) (step S107).

Then, the rotating control means 6B of the CPU 6 receives the rotating angles "$\alpha_1$", "$\alpha_2$" calculated by the rotating control amount calculating means 6A and outputs control signals to the motor drive electronic circuit 7 so that the rotating angles of the movable prisms 10A, 10B become "$\alpha_1$", "$\alpha_2$", respectively (step S109).

The motor drive electronic circuit 7 drives the actuators 4A, 4B in response to the control signals from the rotating control means 6B of the CPU 6, while the actuators 4A, 4B rotates the movable prisms 10A, 10B so that their rotating angles become "$\alpha_1$", "$\alpha_2$", respectively.

Then, the rotating control means 6B of the CPU 6 repeats the processes of steps S 103 to S109 until receiving the hand shake control stop signal from the control switching means 6D of the CPU 6 (step S111).

In this way, the image fluctuation correction device of this embodiment corrects the image fluctuation due to hand shake by rotating the movable prisms 10A, 10B so as to cancel the shake detected by the hand shake detecting unit 5.

«Control Switching Process»

There will be next described the control switching process performed by the image fluctuation correction device of this embodiment.

In the image fluctuation correction device in accordance with the embodiment, when it is judged that the rotating amounts reach the rotating limit amounts, the control switching means 6D transmits a reverse rotating control start signal to start the reverse rotating control of the actuators 4A, 4B to the reverse rotating control means 6C. Further, under condition that the actuators 4A, 4B are controlled by the reverse rotating control means 6C, if it is judged that the rotating control amount calculated by the rotating control amount calculating means 6A agrees with the rotating control amount calculated immediately before, the control switching means 6D transmits a hand shake control start signal to start the control of the actuators 4A, 4B to the rotating control means 6B.

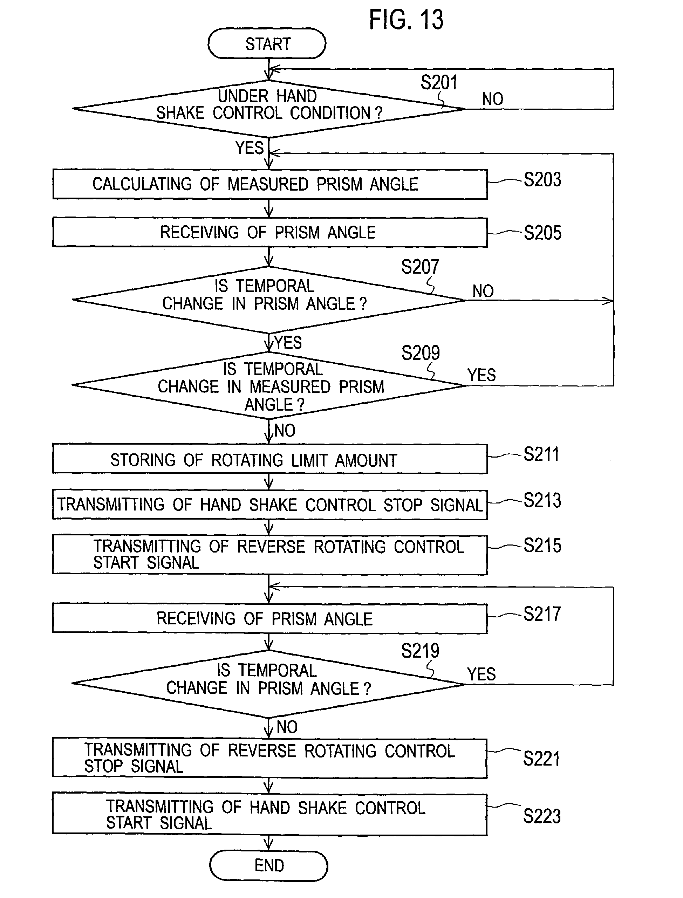

Fig. 13 is a flow chart showing the control switching process flow by the image fluctuation correction device of the embodiment

First, when the image fluctuation correction device is under the hand shake control condition (step S201), the control switching means 6D of the CPU 6 calculates the rotating angles "$\alpha_{10}$", "$\alpha_{20}$" based on the information about the rotating angle brought from the sensors 8A, 8B, and stores the calculated rotating angles "$\alpha_{10}$" and "$\alpha_{20}$" in the storage unit 24 (step S203).

Next, the control switching means 6D of the CPU 6 receives the rotating angles "$\alpha_1$", "$\alpha_2$" of the movable prisms 10A, 10B calculated by the rotating control amount calculating means 6A, and stores the brought rotating angles "$\alpha_1$", "$\alpha_2$" in the storage unit 24 (step S205).

Then, at steps S207 and S208, the control switching means 6D of the CPU 6 judges whether the rotating amounts detected by the sensors 8A, 8B reach respective rotating limit amounts or not.

In detail, the control switching means 6D of the CPU 6 reads out immediately preceding rotating angles "$\alpha_{1(t-1)}$", "$\alpha_{2(t-1)}$" stored in the storage unit 24, and compares the readout rotating angles "$\alpha_{1(t-1)}$", "$\alpha_{2(t-1)}$" with rotating angles "$\alpha_{1(t)}$", "$\alpha_{2(t)}$" of the movable prisms 10A, 10B brought from the rotating control amount calculating means 6A.

Here, "$\alpha_{1(t)}$" and "$\alpha_{2(t)}$" denote current rotating angles of the movable prisms 10A, 10B brought from the rotating control amount calculating means 6A at a time "t", while "$\alpha_{1(t-1)}$" and "$\alpha_{2(t-1)}$" denote rotating angles of the movable prisms 10A, 10B stored in the storage unit 24 immediately before receiving the above rotating angles "$\alpha_{1(t)}$", "$\alpha_{2(t)}$".

Then, the control switching means 6D of the CPU 6 shifts the process to a next step if there exist differences between the rotating angles "$\alpha_{1(t)}$", "$\alpha_{2(t)}$" and the rotating angles "$\alpha_{1(t-1)}$", "$\alpha_{2(t-1)}$" (step S207).

Next, the control switching means 6D of the CPU 6 reads out immediately preceding rotating angles "$\alpha_{10(t-1)}$", "$\alpha_{20(t-1)}$" stored in the storage unit 24, and compares the readout rotating angles "$\alpha_{10(t-1)}$", "$\alpha_{20(t-1)}$" with rotating angles "$\alpha_{10(t)}$", "$\alpha_{20(t)}$" of the movable prisms 10A, 10B calculated based on the information about rotating angles brought from the sensors 8A, 8B.

Here, "$\alpha_{10(t)}$" and "$\alpha_{20(t)}$" denote current rotating angles of the movable prisms 10A, 10B calculated based on the information about rotating angles brought from the sensors 8A, 8B at a time "t", while "$\alpha_{10(t-1)}$" and "$\alpha_{20(t-1)}$" denote rotating angles of the movable prisms 10A, 10B stored in the storage unit 24 immediately before calculating the above rotating angles "$\alpha_{10(t)}$", "$\alpha_{20(t)}$".

If there is no difference between the rotating angles "$\alpha_{10(t)}$", "$\alpha_{20(t)}$" and the rotating angles "$\alpha_{10(t-1)}$", "$\alpha_{20(t-1)}$", then the control switching means 6D of the CPU 6 judges that the rotating amounts detected by the sensors 8A, 8B have reached the rotating limit amounts (step S209), and stores the present rotating angles "$\alpha_{10(t)}$", "$\alpha_{20(t)}$" in the storage unit 24, as rotating limit amounts "$\alpha_{1lim}$", "$\alpha_{2lim}$" (step S211).

By the processes at step S207 and S209, the control switching means 6D of the CPU 6 judges whether the rotating amounts detected by the sensors 8A, 8B have reached the rotating limit amounts or not.

Note that the rotating limit amounts "$\alpha_{1lim}$", "$\alpha_{2lim}$" may be previously established and further stored in the storage unit 24 by an image fluctuation correction device's provider, as values representing the rotating limit amounts of the movable prisms 10A, 10B.B.

Next, the control switching means 6D of the CPU 6 transmits a hand shake control stop signal to the rotating control means 6B (step S213), and transmits the reverse rotating control start signal to the reverse rotating control means 6C (step S215).

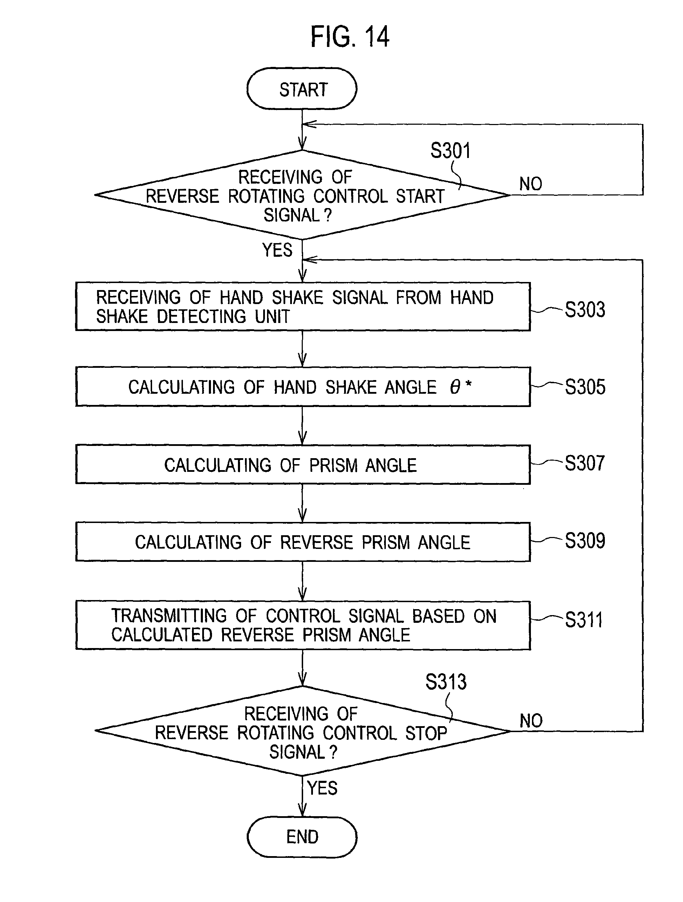

Fig. 14 is a flow chart showing the process flow of a reverse rotating control of the image fluctuation correction device in accordance with the embodiment.

First, when receiving the reverse rotating control start signal from the control switching means 6D (step S301), the reverse rotating control means 6C of the CPU 6 transmits a command of calculating the hand shake angle to the rotating control amount calculating means 6A. Then, the rotating control amount calculating means 6A receiving the command of calculating the hand shake angle receives a hand shake signal from the hand shake detecting unit 5, and calculates the hand shake angle based on the hand shake signal on receipt (steps S303, S305).

In detail, the hand shake detecting unit 5 detects the shake of the video camera 1 due to hand shake, and outputs the shake to the rotating control amount calculating means 6A of the CPU 6, as a hand shake signal. Based on the hand shake signal, the rotating control amount calculating means 6A of the CPU 6 calculates a hand shake angle vector "$_{vector}\theta^{*}$" representing both magnitude and direction of the shake by the above equations (27), (28).

Next, based on the hand shake angle calculated at step S305, the rotating control amount calculating means 6A calculates the rotating angles "$\alpha_1$", "$\alpha_2$" of the movable prisms 10A, 10B required to correct the hand shake by the equations (15) to (21) (step S307).

Then, the reverse rotating control means 6C of the CPU 6 receives the rotating angles "$\alpha_1$", "$\alpha_2$" calculated by the rotating control amount calculating means 6A, and calculates reverse rotating angles "$\alpha_{1R}$", "$\alpha_{2R}$" obtained by reversing the rotating angles "$\alpha_1$", "$a_2$" with respect to the rotating limit amounts "$\alpha_{1lim}$", "$\alpha_{2lim}$" representing the movable limits of the movable refraction elements 10A, 10B symmetrically.

In detail, the reverse rotating control means 6C of the CPU 6 reads out the rotating limit amounts "$\alpha_{1lim}$", "$\alpha_{2lim}$" stored in the storage unit 24 and representing the rotating amounts of the movable limits of the movable refraction elements 10A, 10B, and calculates the reverse rotating angles "$\alpha_{1R}$", "$\alpha_{2R}$" obtained by subtracting differences between the rotating angles "$\alpha_1$", "$\alpha_2$" on receipt and the rotating limit amounts "$\alpha_{1lim}$", "$\alpha_{2lim}$" from the rotating limit amounts "$\alpha_{1lim}$", "$\alpha_{2lim}$" (step S309).

Then, the reverse rotating control means 6C of the CPU 6 outputs the control signal to the motor drive electronic circuit 7 so that the rotating angles of the movable prisms 10A, 10B become the reverse rotating angles "$\alpha_{1R}$", "$\alpha_{2R}$", respectively (step S311).

The motor drive electronic circuit 7 drives the actuators 4A, 4B in response to the control signals from the reverse rotating control means 6C of the CPU 6, while the actuators 4A, 4B rotate the movable prisms 10A, 10B so that their reverse rotating angles become "$\alpha_{1R}$, "$\alpha_{2R}$", respectively.

The reverse rotating control means 6C of the CPU 6 repeats the processes of steps S303 to S311 until receiving the reverse rotating control stop signal from the control switching means 6D of the CPU 6 (step S313).

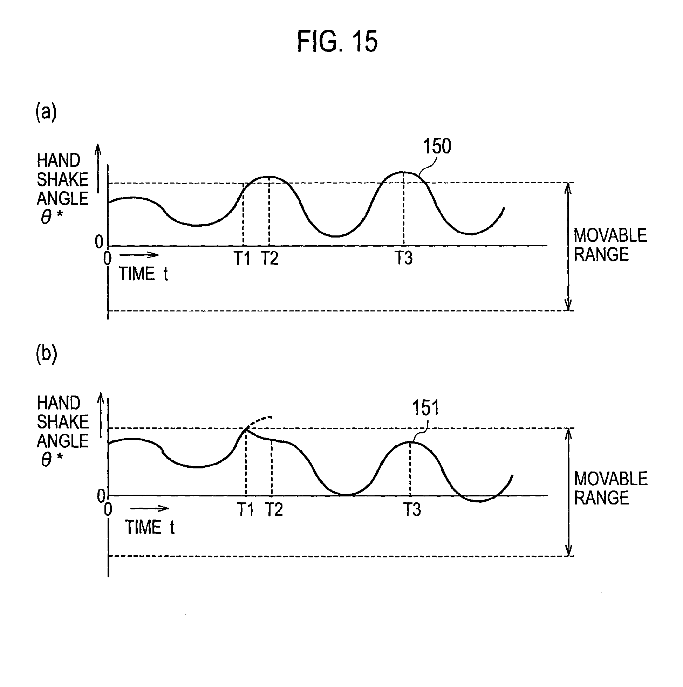

Fig. 15 includes views explaining the control switching process of the image fluctuation correction device in accordance with the embodiment. Fig. 15(a) shows the hand shake angle "$\theta^{*}$" with respect to a time t necessary for the movable prisms 10A, 10B to correct the fluctuation of an image. Fig. 15(b) shows the hand shake angle "$\theta^{*}$" upon the control switching process by the image fluctuation correction device of the embodiment.

In the image fluctuation correction device of this embodiment, as the movable prisms 10A, 10B are movable independently of each other in the vertical and horizontal directions, the hand shake angles "$\theta^{*}$" in the vertical and horizontal directions are calculated independently of each other to perform the control switching process. For the sake of shorthand, however, Fig. 15 only illustrates the hand shake angle "$\theta^{*}$" in the vertical direction in charge of the movable prism 10A.

In Fig. 15(a), a hand shake angle curve 150 represents the hand shake angle "$\theta^{*}$" with respect to a time "t", which is necessary for the movable prism 10A to correct the fluctuation of the image.

The control switching means 6D of the CPU 6 judges that the rotating amount detected by the sensor 8A has reached the rotating limit amount by reason that, at a time "T1", there is a temporal change in the rotating angle "$\alpha_1$", while there is no temporal change in the rotating angle "$\alpha_{10}$", that is, there is a difference between the rotating angle "$\alpha_{1(t)}$" and the rotating angle "$\alpha_{1(t-1)}$", while there is no difference between the rotating angle "$\alpha_{10(t)}$" and the rotating angle "$\alpha_{10(t-1)}$".

Therefore, the control switching means 6D of the CPU 6 transmits the hand shake control stop signal to the rotating control means 6B at the time "T1", and transmits the reverse rotating control start signal to the reverse rotating control means 6C.

As shown in Fig. 15(b), the reverse rotating control means 6C receiving the reverse rotating control start signal receives the rotating angle "$\alpha_1$" at the time "T1" or after, calculates the reverse rotating angle "$\alpha_{1R}$" obtained by reversing

the rotating angle "$\alpha_1$" with respect to the rotating limit amount "$\alpha_{1lim}$" representing the rotating amount of the movable refraction element 10A at the movable limit symmetrically, and controls the actuator 4A based on the calculated reverse rotating angle "$\alpha_{1R}$".

Next, returning to Fig. 13, the control switching means 6D of the CPU 6 receives the rotating angles "$\alpha_{10}$", "$\alpha_{20}$" from the rotating control amount calculating means 6A, and stores the rotating angles "$\alpha_{10}$", "$\alpha_{20}$" in the storage unit 24 (step S217).

Then, at step S219, the control switching means 6D of the CPU 6 judges whether the rotating control amount calculated by the rotating control amount calculating means 6A has reached a peak of hand shake or not.

In detail, the control switching means 6D of the CPU 6 first reads out the immediately-preceding rotating angles "$\alpha_{1(t-1)}$", "$\alpha_{2(t-1)}$" stored in the storage unit 24, and compares the readout rotating angles "$\alpha_{1(t-1)}$", "$\alpha_{2(t-1)}$" with the rotating angles "$\alpha_{1(t)}$", "$\alpha_{2(t)}$" of the movable prisms 10A, 10B brought from the rotating control amount calculating means 6A.

Here, "$\alpha_{1(t)}$" and "$\alpha_{2(t)}$" denote the current rotating angles of the movable prisms 10A, 10B brought from the rotating control amount calculating means 6A at a time "t", while "$\alpha_{1(t-1)}$" and "$\alpha_{2(t-1)}$" denote the rotating angles of the movable prisms 10A, 10B stored in the storage unit 24 immediately before receiving the above rotating angles "$\alpha_{1(t)}$", "$\alpha_{2(t)}$".

Then, if there is no difference between the rotating angles "$\alpha_{1(t)}$", "$\alpha_{2(t)}$" and the rotating angles "$\alpha_{1(t-1)}$", "$\alpha_{2(t-1)}$", then the control switching means 6D of the CPU 6 judges that the rotating control amount calculated by the rotating control amount calculating means 6A has reached the peak of hand shake (step S219), and transmits the reverse rotating control stop signal to the reverse rotating control means 6C (step S221).

Further, the control switching means 6D of the CPU 6 transmits a hand shake control stop signal to the rotating control means 6B (step S223).

When receiving the hand shake control start signal from the control switching means 6D of the CPU 6, the rotating control means 6B starts the hand shake control again, as shown in Fig. 12.

In Fig. 15(b), as there is no temporal change in the rotating angle "$\alpha_1$" at a time "T2", that is, there is no difference between the rotating angle "$\alpha_{1(t)}$" and the rotating angle "$\alpha_{1(t-1)}$", the control switching means 6D of the CPU 6 judges that the rotating control amount calculated by the rotating control amount calculating means 6A has reached the peak of hand shake, transmits the reverse rotating control stop signal to the reverse rotating control means 6C, and transmits the reverse rotating control start signal to the rotating control means 6B.

Consequently, as shown with a hand shake correcting curve 151 of Fig. 15(b), as the reverse rotating control is started from the time "T1" and the hand shake correcting control is started from the time "T2", the oscillation center of the hand shake correcting curve 151 moves toward the center of the movable range of the movable prism 10A.

Therefore, for example, even at a time "T3", it is possible to allow the movable range of the movable prism 10A to have a margin so that the peak of the hand shake correcting curve 151 does not exceed the movable range of the movable prism 10A. Consequently, it is possible to control the rotating amount of the movable prism 10A within the movable range appropriately so that the hand shake correcting curve 151 does not exceed the movable range.

In addition, when the rotating control amount calculated by the rotating control amount calculating means 6A reaches the peak of hand shake, the control switching means 6D of the CPU 6 changes the reverse rotating control to the hand shake control at T2 of Fig. 15(b) so that the hand shake correcting curve under the reverse rotating control is smoothly joined to the hand shake correcting curve under the hand shake control. Thus, it is possible to provide a user with natural images even when switching the control.

As mentioned above, when it is judged that the rotating amounts detected by the sensors 8A, 8B reach the movable limit amounts, the control switching means 6D transmits the reverse rotating control start signal for starting the reverse rotating of the actuators 4A, 4B to the reverse rotating control means 6C. Further, while the actuators 4A, 4B are being controlled by the reverse rotating control means 6C, when it is judged that the rotating control amount calculated by the rotating control amount calculating means 6A agrees with the rotating control amount calculated immediately before, the control switching means 6D transmits the hand shake control start signal for starting the control of the actuators 4A, 4B to the rotating control means 6B. Consequently, it is possible to appropriately control the rotating amounts of the movable prisms within the movable ranges so that the rotating amounts of the movable prisms required to correct the fluctuation of an image do not exceed the movable ranges.

«Variation of 1st. Embodiment»

<Variation 1-1>

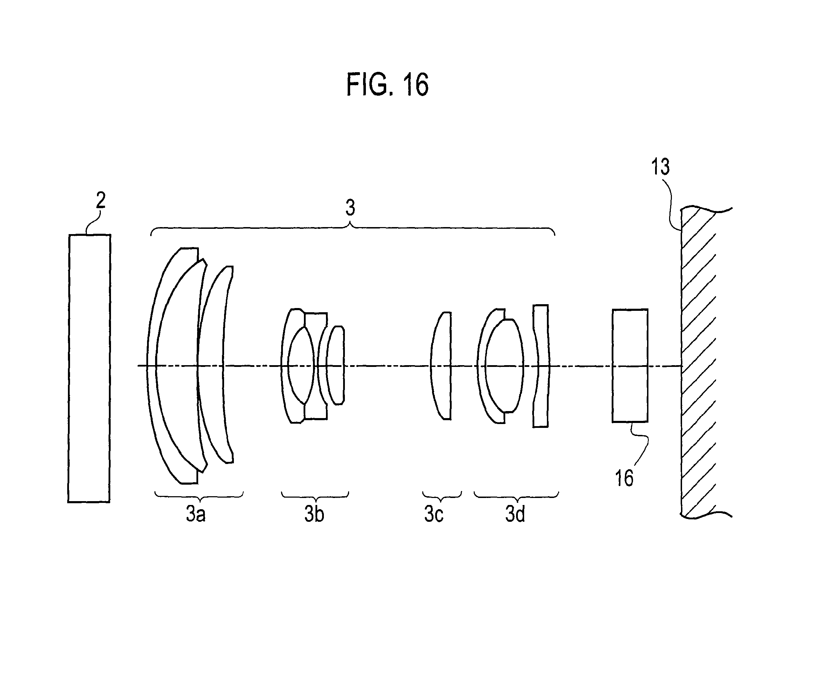

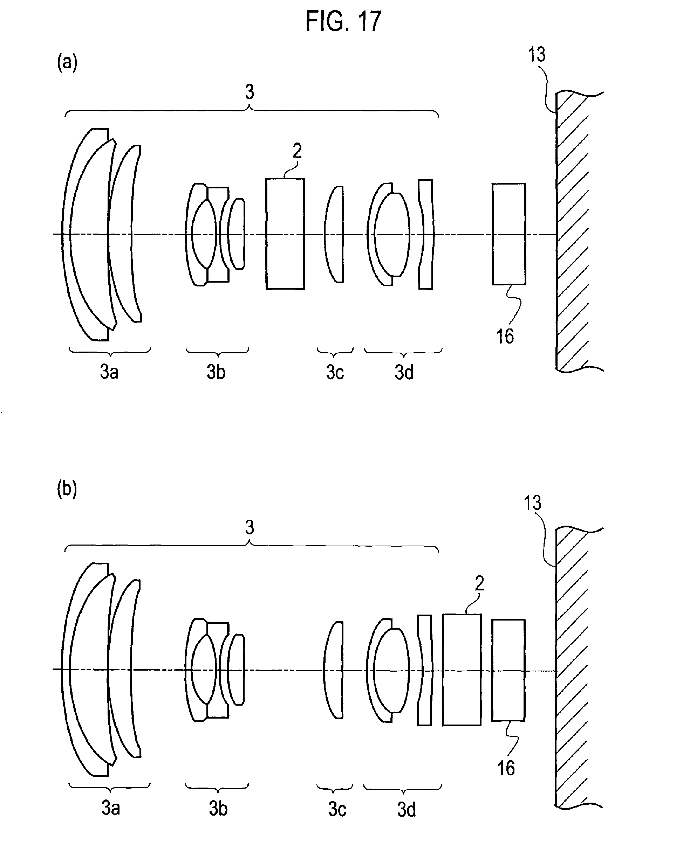

Although the lens system 3 is expressed in the form of one block in the video camera 1 of the first embodiment shown in Fig. 1, the lens system 3 may be formed by a plurality of lenses in group. Fig. 16 is a view showing the lens system of Fig. 1. Fig. 17(a) is a view showing an arrangement where the correction unit 2 is arranged in the lens system 3. Fig. 17(b) is a view showing an arrangement where the correction unit 2 is arranged behind the lens system 3.

The lens system 3 comprises first to fourth lens groups 3a to 3d. Behind the lens system 3, there are an optical low-pass filter 16 for suppressing noise (false signal), which is not shown in Fig. 1 and the CCD unit 13 for imaging a subject image.

In Fig. 1, the correction unit 2 is arranged in front of the lens system 3 as shown in Fig. 16. However, the correction unit 2 may be arranged inside the lens system 3, as shown in Fig. 17(a). Alternatively, as shown in Fig. 17 (b), the correction unit 2 may be arranged behind the lens system 3. Consequently, as the correction unit 2 is arranged in a narrow part of light flux during or after its passage through the lens system 3, it is possible to miniaturize the correction unit 2.

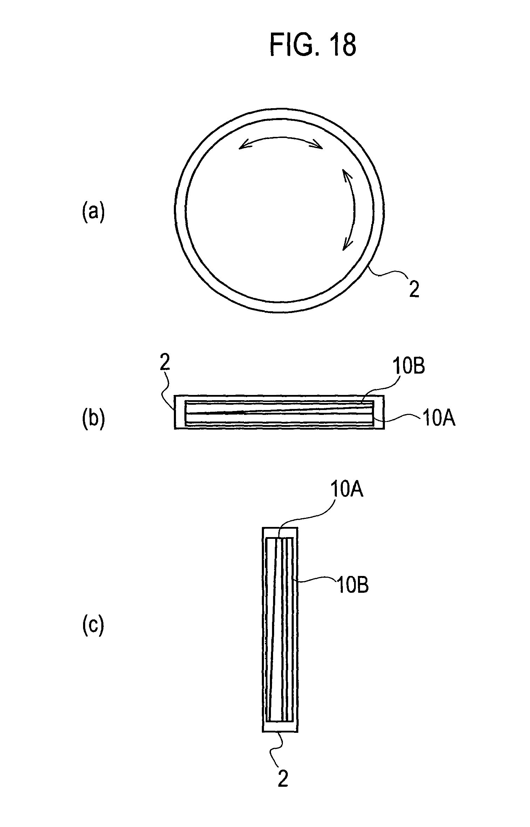

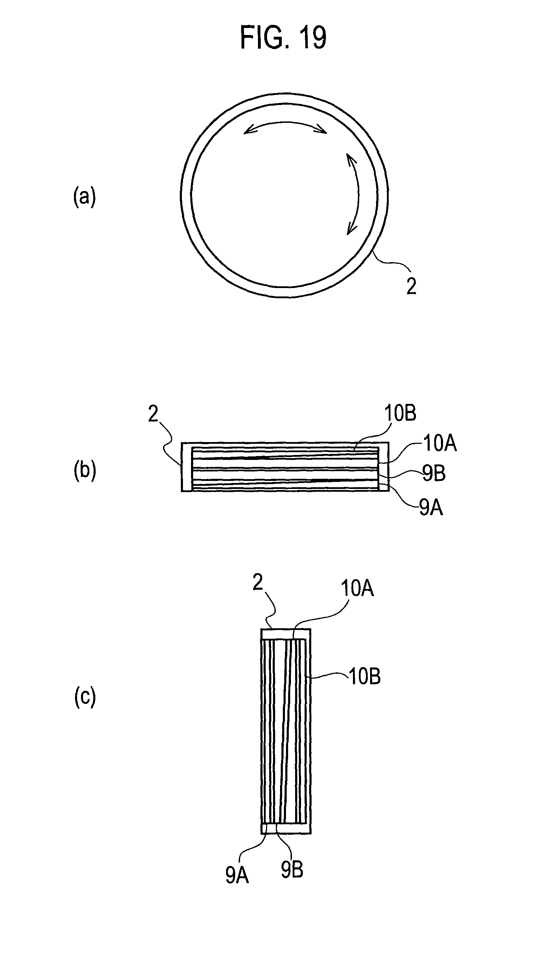

Although the correction unit 2 includes the fixed prism 9 and the movable prisms 10A, 10B as shown in Fig. 3, the fixed prism 9 may be deleted from the device. Alternatively, a further fixed prism may be added to the device. Fig. 18 includes views showing a correction unit with no fixed prism, as another form of the correction unit 2. Fig. 18(a) is a front view of the unit, Fig. 18(b) a plan view, and Fig. 18(c) is a side view. In addition, Fig. 19 includes views showing a correction unit with two sheets of fixed prisms as the other form of the correction unit 2. Fig.19(a) is a front view of the unit, Fig. 19(b) a plan view, and Fig.19(c) is a side view.

In the arrangement of Fig. 19, the positions of respective prisms are adjusted so that an incident angle becomes equal to an emitting angle about the correction unit 2 in the initial state.
In common with Figs. 18 and 19, the other operations are similar to those in the first embodiment mentioned above. Accordingly, the similar effects would be provided in this case.

As the arrangement of Fig. 18 is provided with two movable prisms 10A, 10B only, the image is shifted in the initial state by the image shift angle θ, as obvious from Fig. 9(b). However, such a condition does not have direct connection with the image fluctuation correction.

However, it should be noted that the arrangement of Fig. 18 deleting the fixed prism 9 causes the image shift due to chromatic aberration to be increased in comparison with the arrangements of Figs. 3 and 19. That is, although the correction unit 2 in common with Figs. 3 and 19 is constructed so that the fixed prism 9 makes an incident angle on the unit 2 equal to the emitting angle in the initial state, the arrangement comes from the purpose of minimizing the influence of prism effect at the image fluctuation correction on the chromatic aberration thereby to reduce an amount of the image shift correction derived therefrom. On the contrary, as the correction unit of Fig. 18 eliminates the fixed prism 9, the incident angle does not become equal to the emitting angle in the initial state. Comparing with the arrangements of Figs. 3 and 19, therefore, the image shift due to chromatic aberration gets larger. On the other hand, the arrangement of Fig. 18 with no fixed prism allows a length of the correction unit 2 in the direction of the optical axis to be shortened, realizing its miniaturization.

Alternatively, the device may be designed so as to strike a balance between the effect of reducing the correction amount against the image shift due to chromatic aberration and the effect of miniaturizing the correction unit 2. Then, the correction amount of the image shift due to chromatic aberration is not so great as that of Fig. 18, while the correction unit 2 can be small-sized in comparison with the units of Figs. 3 and 19. That is, the prism angle of the fixed prism 9 may be adjusted so that the amount of the image shift due to chromatic aberration is located midway between the image shift of Fig. 18 and that of Figs. 3 and 19. With this adjustment, it is possible to strike a balance between the effect of reducing the correction amount against the image shift due to chromatic aberration and the effect of miniaturizing the correction unit 2.

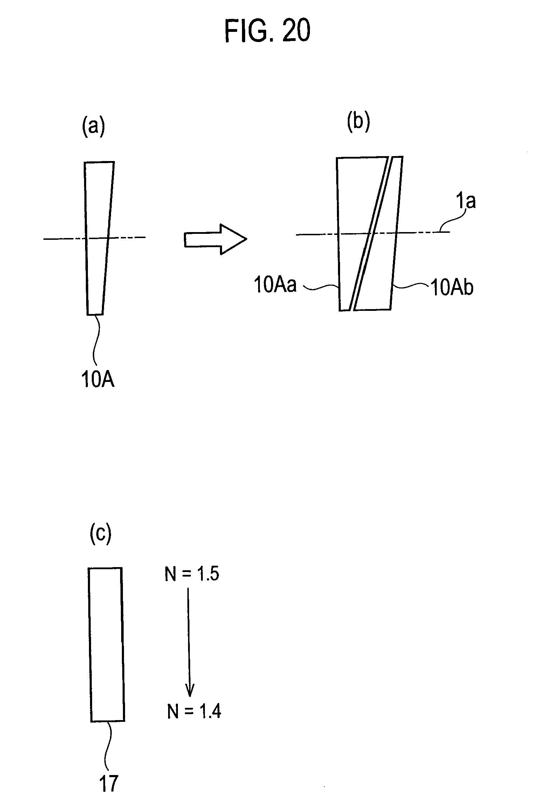

In addition, each of the prisms in the embodiments of Figs. 3,18 and 19 may be provided in the form of a simplex prism or a compound prism. Alternatively, the prism may be formed by a parallel plate having prism effect. Fig. 20(a) is a view showing such a simplex prism, Fig. 20(b) a view of such a compound prism, and Fig. 20(c) is a view showing such a parallel plate having prism effect

For instance, as shown in Fig. 20(b), the movable prism 10A may be provided in the form of a compound prism produced by bonding two sheets of prisms 10Aa, 10Ab with minute angles. In case of this compound prism, it is possible to increase an angle of each prism body, facilitating a production of a minute-angle prism that could be formed by a simplex prism with difficultly.

Further, as shown in Fig. 20(c), each prism may be replaced by a parallel plate 17 having prism effect with a refraction index "N" changed from N = 1.5 to N= 1.4. Although the prism is usually required to control its inclination angle in the course of production, the provision of the parallel plate 17 would facilitate a processing of the prism.

<2nd. Embodiment>

The second embodiment of the present invention will be described below. Also in this embodiment, similarly to the first embodiment, we describe with illustration of an image fluctuation correction device that appropriately controls the rotating amounts of the movable prisms within their movable ranges so that the rotating amounts required to correct the fluctuation of an image do not exceed the movable ranges.

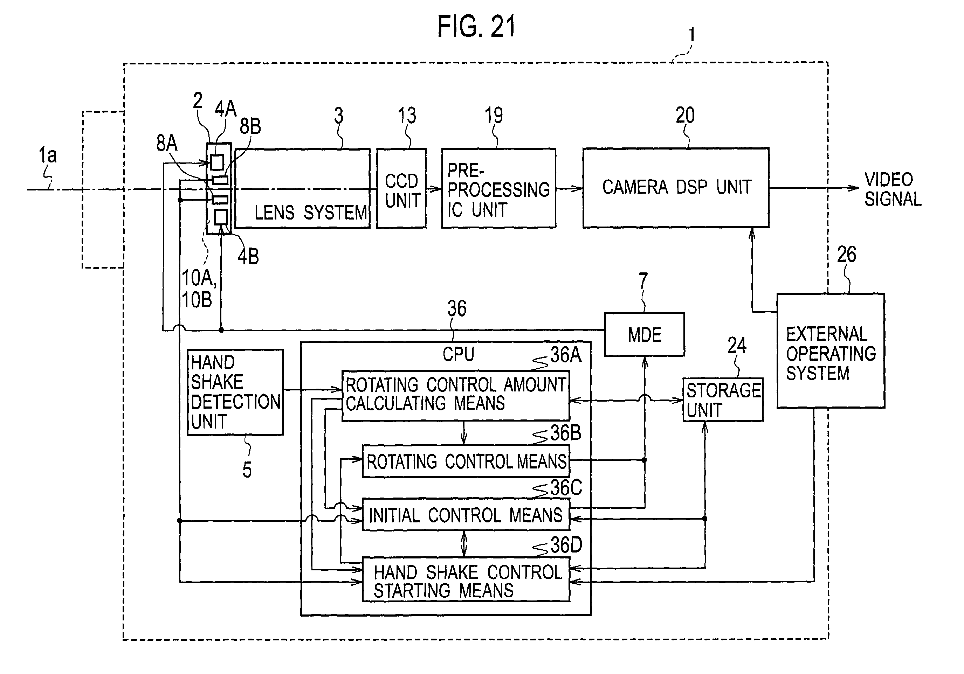

Fig. 21 is a block diagram showing the constitution of the image fluctuation correction device in accordance with the second embodiment of the present invention. The image fluctuation correction device of the present invention is provided in the well-known video camera 1, for example.

Note that, in the image fluctuation correction device of the second embodiment, constituting elements identical to those of the image fluctuation correction device of the first embodiment are indicated with the same reference numerals, and their explanations are eliminated appropriately. We mostly describe different constituents from the constituents of the image fluctuation correction device of the first embodiment

In this embodiment, the video camera 1 includes the correction unit 2 having the fixed prism 9 (Fig. 3) and the pair of movable prisms 10A, 10B independently rotatable about the optical axis 1a as the rotating center, the lens system 3 for taking pictures of a subject, the CCD unit 13 allowing incident light through the lens system 3 to form an image and also converting a so-formed subject image into electrical signals, the pre-processing IC unit 19 having CDS, AGC and A/D conversion functions, the camera DSP unit 20 applying various digitization on input signals from the pre-processing IC unit 19, the actuators 4A, 4B for rotating the pair of movable prisms in the correction unit 2 respectively and independently, the hand shake detecting unit 5 for detecting a fluctuation by an angular speed of the video camera 1 due to hand shake etc. and generating hand shake signals, a CPU 36 carrying out various controls, the motor drive electronic circuit (MDE) 7 for driving the actuators 4A, 4B in response to the control signals from the CPU 36, sensors 8A, 8B for detecting rotations of the pair of movable prisms in the correction unit 2, the storage unit 24 for storing data etc. necessary for hand shake control and the external operation system 26 including operating buttons etc.

As one constituent different from the constituents of the image fluctuation correction device of the first embodiment, the CPU 36 includes rotating control amount calculating means 36A for calculating respective rotating control amounts of two actuators 4A, 4B so as to cancel fluctuation detected by the hand shake detecting unit 5, rotating control means 36B for controlling two rotating means 4A, 4B, initial control means 36C for controlling the actuators 4A, 4B and hand shake control starting means 36D for transmitting a hand shake control start signal to the rotating control means 36B thereby to start the control operation. Again, the initial control means 36C calculates amplitudes of the rotating control amounts from their maximum and minimum values in a predetermined period calculated by the rotating control amount calculating means 36A, and calculates rotating-amount start set values by multiplying the calculated amplitudes by a predetermined set-value amplitude multiple number. Further, the initial control means 36C controls the actuators 4A, 4B initially so that the rotating amounts detected by the sensors 8A, 8B become equal to the rotating-amount start set values. The hand shake control starting means 36D transmits an initial control start signal for allowing the initial control means 36C to start the initial control. When the rotating control amounts calculated by the rotating control amount calculating means 36A become equal to the rotating-amount start set values, the hand shake control starting means 36D transmits the hand shake control start signal for allowing the rotating control means 36B to start the control operation.

Although the image fluctuation correction device of this embodiment includes the correction unit 2 and the CPU 36, the device has only to contain at least the rotating control amount calculating means 36A, the rotating control means 36B, the initial control means 36C and the hand shake control starting means 36D.

Next, the operation of the image fluctuation correction device of this embodiment will be described

In the image fluctuation correction device of this embodiment, the rotating control amount calculating means 36A calculates the rotating angles of the movable prisms 10A, 10B necessary for correcting the hand shake on the basis of the fluctuation detected by the hand shake detecting unit 5. The initial control means 36C calculates the rotating-amount start set values from the rotating angles of the movable prisms 10A, 10B in the predetermined period calculated by the rotating control amount calculating means 36A, and starts the initial control of the actuators 4A, 4B so that the rotating angles detected by the sensors 8A, 8B become equal to the rotating-amount start set values. In addition, when the rotating angles of the movable prisms 10A, 10B calculated by the rotating control amount calculating means 36A become equal to the rotating-amount start set values calculated by the initial control means 36C, the rotating control means 36B starts the control of two rotating means 4A, 4B on the basis of the rotating angles calculated by the rotating control amount calculating means 36A.

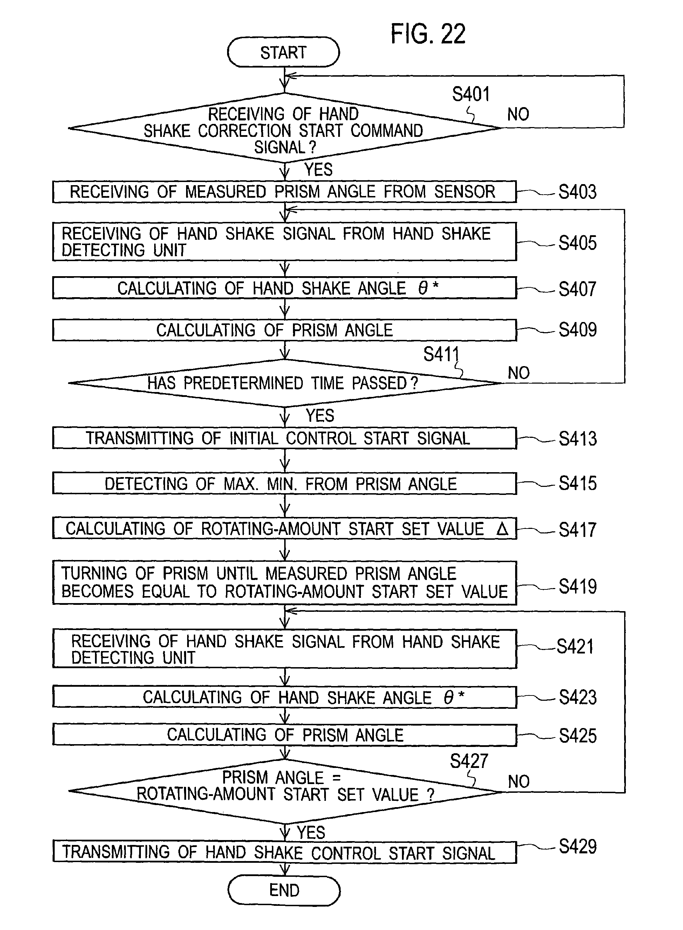

Fig. 22 is a flow chart showing the process flow of the image fluctuation correction device in accordance with this embodiment

First of all, when receiving a command signal for hand shake correction start by a user's manipulating of push-buttons accepted by the external operation system 26 (step S401), the hand shake control starting means 36D of the CPU 36 calculates rotating angles "$\alpha_{10}$", "$\alpha_{20}$" of the movable prisms 10A, 10B from their rotating information detected by the sensors 8A, 8B (step S403).

Next, the hand shake control starting means 36D of the CPU 36 transmits a command of calculating a hand shake angle to the rotating control amount calculating means 36A. Then, receiving the command of calculating the hand shake angle, the rotating control amount calculating means 36A receives hand shake signals from the hand shake detecting unit 5, and calculates the hand shake angle according to the received hand shake signal (steps S405, S407).

Then, based on the hand shake angle calculated at step S407, the rotating control amount calculating means 36A calculates the rotating angles "$\alpha_1$", "$\alpha_2$" of the movable prisms 10A, 10B required to correct the hand shake (step S409).

As for the rotating angle calculating process of the rotating control amount calculating means 36A at steps S405 to S409, the preceding descriptions with reference to Figs. 6 to 11 are also applicable to this process and therefore, its descriptions are eliminated.

As above, receiving the command of calculating the hand shake vector "$_{vector}\theta^*$" from the hand shake control starting means 36D of the CPU 36, the rotating control amount calculating means 36A receives the hand shake signals from the hand shake detecting unit 5 at predetermined intervals, and calculates the hand shake vector "$_{vector}\theta^*$" on the basis of the received hand shake signal. Based on the hand shake vector "$_{vector}\theta^*$", in addition, the rotating control amount calculating means 36A calculates components "$\alpha_1$", "$\alpha_2$" of the rotating angle vector "$_{vector}\alpha$" of the movable prisms 10A, 10B necessary for correcting the hand shake (steps S405 to S409).

In detail, the hand shake detecting unit 5 detects fluctuation of the video camera 1 due to hand shake at predetermined intervals and outputs the detected fluctuation to the rotating control amount calculating means 36A of the CPU 36, in the form of hand shake signals. Based on the hand shake signals, the rotating control amount calculating means 36A of the CPU 36 calculates a hand shake angle vector "$_{vector}\theta^*$" representing both fluctuation's magnitude and direction by the calculating equations (27) and (28).

Then, the rotating control amount calculating means 36A of the CPU 36 calculates the components "$\alpha_1$", "$\alpha_2$" of the rotating angle vector "$_{vector}\alpha$", based on the equations (15) to (21).

Next, the rotating control amount calculating means 36A of the CPU 36 sequentially stores the calculated rotating angles "$\alpha_1$", "$\alpha_2$" and associated time in the storage unit 24 until a predetermined period has passed (step S411). Here, the above predetermined period for storing the rotating angles "$\alpha_1$", "$\alpha_2$" in the storage unit 24 has to be previously established at least more than a half of hand shake cycle so as to contain a maximum value of the hand shake amplitude and its minimum value.

«Hand Shake Control Start Judgment Process»

Next, the hand shake control start judgment process by the image fluctuation correction device of this embodiment will be described.

The hand shake control starting means 36D of the CPU 36 judges whether the hand shake correction control should be started or not (steps S413 to S427).

In detail, firstly, the hand shake control starting means 36D of the CPU 36 transmits the initial control start signal for starting the initial control of the actuators 4A, 4B to the initial control means 36C (step S413).

The initial control means 36C receiving the initial control start signal extracts a maximum and a minimum from the values of the rotating angles "$\alpha_1$", "$\alpha_2$" stored in the storage unit 24 (step S415).

Next, the initial control means 36C calculates the amplitude of hand shake from the maximum value and minimum value of the rotating angles "$\alpha_1$", "$\alpha_2$" extracted at step S415, and calculates the rotating-amount start set values "$\Delta_1$", "$\Delta_2$" from the calculated amplitude of hand shake (step S417).

In detail, the initial control means 36C of the CPU 36 multiplies the amplitude of hand shake calculated from the maximum value and minimum value of the rotating angles "$\alpha_1$", "$\alpha_2$" by the set-value amplitude multiple number read out of the storage unit 24 thereby to establish the rotating-amount start set values "$\Delta_1$", "$\Delta_2$". This set-value amplitude multiple number may be assignable in between 0 to 1 optionally Again, the set-value amplitude multiple number is set by an image fluctuation correction device's provider or the like and also stored in the storage unit 24, in advance.

Next, the initial control means 36C of the CPU 36 controls the actuators 4A, 4B so that the rotating angles "$\alpha_{10}$", "$\alpha_{20}$" calculated based on the information about rotating angles brought from the sensors 8A, 8B become equal to the rotating-amount start set values "$\Delta_1$", "$\Delta_2$" (step S419). Consequently, the movable prisms 10A, 10B are rotated until their rotating angles "$\alpha_{10}$" "$\alpha_{20}$" reach rotating angles "$\alpha_{100}$", "$\alpha_{200}$" corresponding to the rotating-amount start set values "$\Delta_1$","$\Delta_2$".

Next, the hand shake control starting means 36D of the CPU 36 transmits a command of calculating a hand shake angle vector "$_{vector}\theta^*$"to the rotating control amount calculating means 36A. Then, receiving the command of calculating the hand shake angle vector, the rotating control amount calculating means 36A receives hand shake signals from the hand shake detecting unit 5, and calculates the hand shake angle vector "$_{vector}\theta^*$" according to the received hand shake signal. Then, based on the hand shake angle vector "$_{vector\theta}^*$", the rotating control amount calculating means 36A calculates the rotating angles "$\alpha_1$", "$\alpha_2$" of the movable prisms 10A, 10B required to correct the hand shake (steps S421 to S425).

In detail, the hand shake detecting unit 5 detects fluctuation of the video camera 1 due to hand shake at predetermined intervals and outputs the detected fluctuation to the rotating control amount calculating means 36A of the CPU 36, in the form of hand shake signals. Based on the hand shake signals, the rotating control amount calculating means 36A of the CPU 36 calculates the hand shake angle vector "$\theta^*$" representing both fluctuation's magnitude and direction by the calculating equations (27) and (28).

Then, the rotating control amount calculating means 36A of the CPU 36 calculates the components "$\alpha_1$"," $\alpha_2$"

of the rotating angle vector "$_{vector}\alpha$", based on the equations (15) to (21).

Next, the hand shake control starting means 36D of the CPU 36 compares the rotating angles "$\alpha_1$", "$\alpha_2$" of the movable prisms 10A, 10B calculated by the rotating control amount calculating means 36A with the rotating angles "$\alpha_{100}$", "$\alpha_{200}$" corresponding to the rotating-amount start set values "$\Delta_1$", "$\Delta_2$" (step S427).

Then, when the hand shake control starting means 36D of the CPU 36 judges that the rotating angles "$\alpha_1$", "$\alpha_2$" have become equal to the rotating angles "$\alpha_{100}$", "$\alpha_{200}$", the same means 36D transmits an initial control stop signal to the initial control means 36C, and transmits the hand shake control start signal to the rotating control means 36B (step S429). Note that the hand shake control start signal is a signal for starting the control of the actuators 4A, 4B in order to realize the rotating angles calculated by the rotating control amount calculating means 36A.

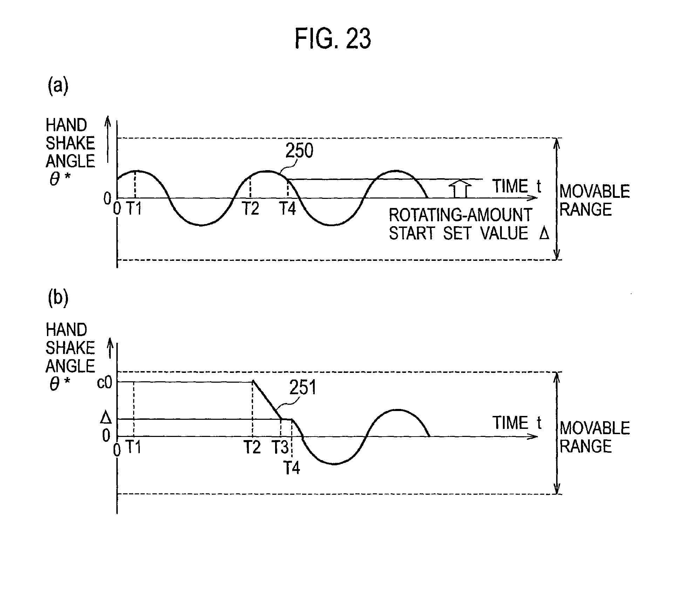

Fig. 23 includes views explaining a hand shake control start judgment process of the image fluctuation correction device in accordance with the embodiment. Fig. 23(a) shows the hand shake angle "$\theta^*$" with respect to time, which is required for the movable prisms 10A, 10B to correct the fluctuation of an image. Fig. 23(b) shows the hand shake angle "$\theta^*$" under condition that the hand shake correction control is started by the image fluctuation correction device of the second embodiment

In the image fluctuation correction device of this embodiment, as the movable prisms 10A, 10B are movable independently of each other in the vertical and horizontal directions, the hand shake angles "$\theta^*$" in the vertical and horizontal directions are calculated to carry out the hand shake start judgment process, independently of each other. For the sake of shorthand, however, Fig. 23 only illustrates the hand shake angle "$\theta^*$" in the vertical direction in charge of the movable prism 10A.

In Fig. 23(a), a hand shake angle curve 250 represents the hand shake angle "$\theta^*$" with respect to a time "t", which is required for the movable prism 10A to correct the fluctuation of an image.

At the time "T1", when receiving the hand shake correction start command signal due to an external manipulation by a user or the like, the CPU 36 starts the hand shake control start judgment process.

First of all, at the time "T1", the rotating control amount calculating means 36A of the CPU 36 receives the rotating information about the movable prism 10A detected by the sensor 8A thereby to obtain the value of the rotating angle "$\alpha_{10}$" corresponding to "c0", as shown in Fig. 23(b). Note that "c0" denotes an initial position of the movable prism 10A at the time of receiving the hand shake correction start command signal due to an external manipulation by a user or the like.

Therefore, the hand shake control starting means 36D of the CPU 36 transmits a command of calculating the hand shake angle to the rotating control amount calculating means 36A. At the time "T1" and thereafter, the rotating control amount calculating means 36A receives the hand shake signals from the hand shake detecting unit 5 at predetermined intervals, and calculates the hand shake angle "$\theta^*$" based on the received hand shake angle.

In addition, at the time "T1" and thereafter, the rotating control amount calculating means 36A calculates the rotating angle "$\alpha_1$" of the prism 10A required to correct the hand shake on the basis of the calculated hand shake angle "$\theta^*$", by the equations (15) to (21).

Next, at the time "T2" when the predetermined period has passed, the hand shake control starting means 36D of the CPU 36 transmits the initial control start signal for starting the initial control of the actuator 4A to the initial control means 36C.

The initial control means 36C on receipt of the initial control start signal calculates the rotating-amount start set value "$\Delta_1$", and initially controls the actuator 4A so that the rotating angle "$\alpha_{10}$" of the prism 10A becomes the rotating angle "$\alpha_{100}$" corresponding to the rotating-amount start set value "$\Delta_1$", at the time "T2" and thereafter.

In Fig. 23(b), at the time "T3", the rotating angle "$\alpha_{10}$" has reached the rotating angle $\alpha_{100}$ corresponding to the rotating-amount start set value "$\Delta_1$".

Next, the hand shake control starting means 36D of the CPU 36 compares the rotating angle "$\alpha_1$" of the movable prism 10A calculated by the rotating control amount calculating means 36A with the rotating angle "$\alpha_{100}$" corresponding to the rotating-amount start set value "$\Delta_1$".

In Fig. 23(b), as the hand shake control starting means 36D of the CPU 36 judges that the rotating angle "$\alpha_{100}$" agrees with the rotating angle "$\alpha_1$", the same means 36D transmits the hand shake control start signal for starting the control of the actuator 4A to the rotating control means 36B at a time T4.

Thus, on receipt of the hand shake control start signal from the hand shake control starting means 36D, the rotating control means 36B of the CPU 36 starts the hand shake correction control.

Consequently, as shown with a hand shake correcting curve 251 of Fig. 23(b), as the hand shake correction control starts from the time "T4", the oscillation center of the hand shake correcting curve 251 agrees with the center of the movable range of the movable prism 1 0A, it is possible to control the rotating amount of the movable prism 10A within the movable range so that the hand shake correcting curve 251 does not exceed the movable range, appropriately.

«Hand Shake Correction»

Next, the hand shake correcting operation of the image fluctuation correction device of the embodiment will be described.

When receiving the hand shake control start signal for starting the control of two actuators 4A, 4B from the hand shake control starting means 36D, the rotating control means 36B of the CPU 36 starts the hand shake correction control.

In detail, the hand shake detecting unit 5 detects fluctuation of the video camera 1 due to hand shake, and outputs the detected fluctuation to the rotating control amount calculating means 36A of the CPU 36, in the form of hand shake signals. Based on the hand shake signals, the rotating control amount calculating means 36A of the CPU 36 calculates the hand shake angle vector "$\theta^*$" representing both fluctuation's magnitude and direction by the calculating equations (27) and (28).

Then, the rotating control amount calculating means 36A of the CPU 36 calculates the vector "$_{vector}\alpha$", based on the equations (15) to (21), and transmits the rotating angles "$\alpha_1$", "$\alpha_2$ as components of the calculated vector "$_{vector}\alpha$" to the rotating control means 36B. Then, the rotating control means 36B outputs the control signal to the motor drive electronic circuit 7 so that the rotating angles of the movable prisms 10A, 10B become "$\alpha_1$, "$\alpha_2$" respectively.

The motor drive electronic circuit 7 drives the actuators 4A, 4B in response to the control signals from the rotating control means 36B of the CPU 36, while the actuators 4A, 4B rotate the movable prisms 10A, 10B so that their rotating angles become "$\alpha_1$", "$\alpha_2$", respectively.

In this way, according to the image fluctuation correction device of this embodiment, the rotating control means 36B of the CPU 36 allows the movable prisms 10A, 10B after receiving the hand shake control start signal from the hand shake control starting means 36D to rotate so as to cancel the fluctuation detected by the hand shake detecting unit 5, whereby the fluctuation of an image due to hand shake is corrected.

<3rd. Embodiment>

The third embodiment of the present invention will be described below. Also in this embodiment, similarly to the first embodiment, we describe with illustration of an image fluctuation correction device that appropriately controls the rotating amounts of the movable prisms within their movable ranges so that the rotating amounts required to correct the fluctuation of an image do not exceed the movable ranges.

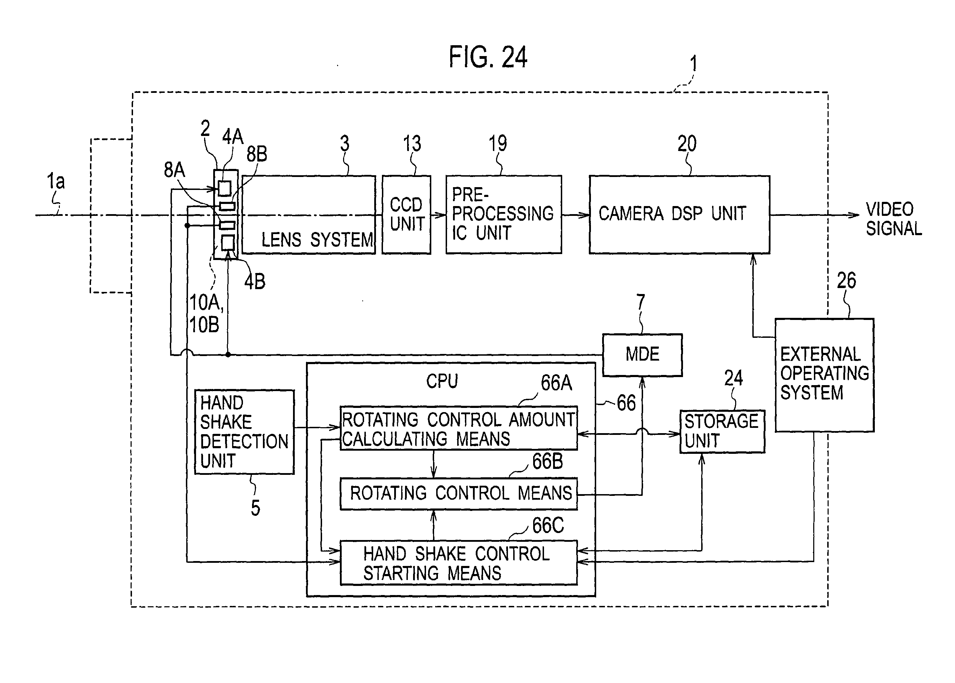

Fig. 24 is a block diagram showing the image fluctuation correction device in accordance with the third embodiment of the present invention. The image fluctuation correction device of the present invention is provided in the well-known video camera 1, for example.

Note that, in the image fluctuation correction device of the third embodiment, constituting elements identical to those of the image fluctuation correction device of the first embodiment are indicated with the same reference numerals, and their explanations are eliminated appropriately. We mostly describe different constituents from the constituents of the image fluctuation correction device of the first embodiment

In this embodiment, the video camera 1 includes the correction unit 2 having the fixed prism 9 (Fig. 3) and the pair of movable prisms 10A, 10B independently rotatable about the optical axis 1a as the rotating center, the lens system 3 for taking pictures of a subject, the CCD unit 13 allowing incident light through the lens system 3 to form an image and also converting a so-formed subject image into electrical signals, the pre-processing IC unit 19 having CDS, AGC and And conversion functions, the camera DSP unit 20 applying various digitization on input signals from the pre-processing IC unit 19, the actuators 4A, 4B for rotating the pair of movable prisms in the correction unit 2 respectively and independently, the hand shake detecting unit 5 for detecting a fluctuation by an angular speed of the video camera 1 due to hand shake etc. and generating hand shake signals, a CPU 66 carrying out various controls, the motor drive electronic circuit (MDE) 7 for driving the actuators 4A, 4B in response to the control signals from the CPU 66, the sensors 8A, 8B for detecting rotations of the pair of movable prisms in the correction unit 2, the storage unit 24 for storing data etc. necessary for hand shake control and the external operation system 26 including operating buttons etc.

As one constituent different from the constituents of the image fluctuation correction device of the first embodiment, the CPU 66 includes rotating control amount calculating means 66A for calculating respective rotating control amounts of two actuators 4A, 4B so as to cancel fluctuation detected by the hand shake detecting unit 5, rotating control means 66B for transmitting control signals to control two rotating means 4A, 4B and hand shake control starting means 66C that transmits a hand shake control start signal for allowing the rotating control means 66B to start the control of the actuators 4A, 4B.

Although the image fluctuation correction device of this embodiment includes the correction unit 2 and the CPU 66, the device has only to contain at least the rotating control amount calculating means 66A, the rotating control means 66B and the hand shake control starting means 66C.

Next, the operation of the image fluctuation correction device of this embodiment will be described.

In this embodiment, the image fluctuation correction device receives the information about rotating angles of the movable prisms 10A, 10B from the sensors 8A, 8B, calculates the tuning angles of the movable prisms 10A, 10B necessary for correcting the hand shake on the basis of the fluctuation detected by the hand shake detecting unit 5, and compares the calculated rotating angles with the rotating angles calculated based on the received information about rotating angles. Then, when the former rotating angles agree with the latter rotating angles or the absolute values of differences between the former rotating angles and the latter rotating angles become minimum, the image fluctuation correction device transmits the hand shake control start signal for allowing the rotating control means 66B to start the control of the two rotating means 4A, 4B.

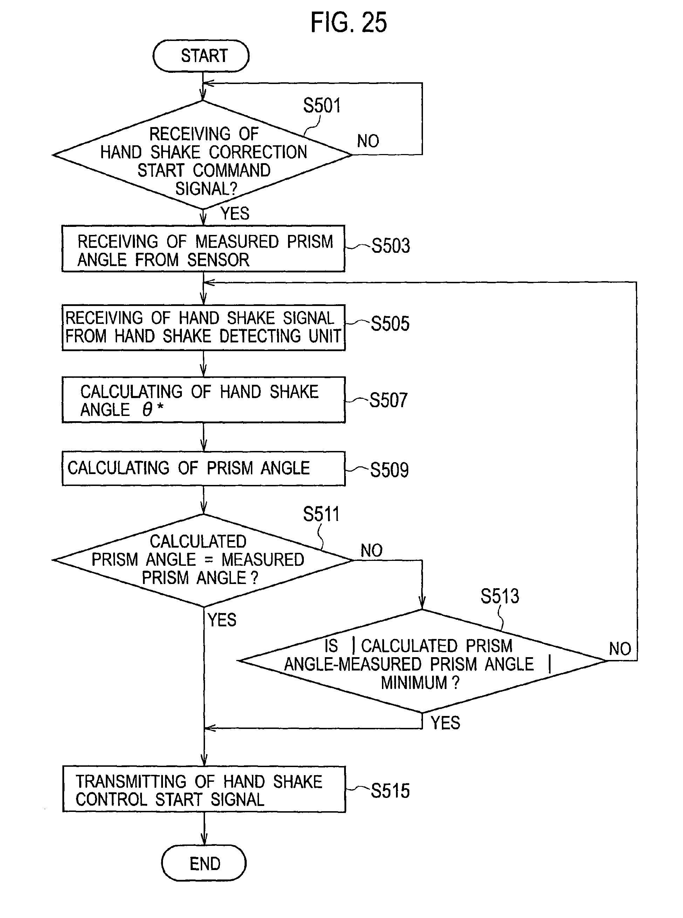

Fig. 25 is a flow chart showing the process flow of the image fluctuation correction device in accordance with this embodiment

First of all, when receiving a command signal for hand shake correction start by a user's manipulating of push-buttons accepted by the external operation system 26 (step S501), the hand shake control starting means 66C of the CPU 66 calculates rotating angles "$\alpha_{10}$", "$\alpha_{20}$" of the movable prisms 10A, 10B upon receipt of their rotating information detected by the sensors 8A, 8B (step S503).

Then, the hand shake control starting means 66C of the CPU 66 transmits a command of calculating a hand shake angle to the rotating control amount calculating means 66A. Then, receiving the command of calculating the hand shake angle, the rotating control amount calculating means 66A further receives hand shake signals from the hand shake detecting unit 5, and calculates the hand shake angle according to the received hand shake signal (steps S505, S507).

Next, based on the hand shake angle calculated at step S507, the rotating control amount calculating means 66A calculates the rotating angles "$\alpha_1$", "$\alpha_2$" of the movable prisms 10A, 10B required to correct the hand shake (step S509).

As for the rotating angle calculating process of the rotating control amount calculating means 66A at steps S505 to S509, the preceding descriptions with reference to Figs. 6 to 11 are also applicable to this process and therefore, its descriptions are eliminated.

As above, receiving the command of calculating the hand shake vector "$_{vector}\theta^{*}$" from the hand shake control starting means 66C of the CPU 66, the rotating control amount calculating means 66A receives the hand shake signals from the hand shake detecting unit 5, and calculates the hand shake vector "$_{vector}\theta^{*}$" on the basis of the received hand shake signal. Based on the hand shake vector "$_{vector}\theta^{*}$", in addition, the rotating control amount calculating means 66A calculates the rotating angles "$\alpha_1$", "$\alpha_2$" of the movable prisms 10A, 10B necessary for the hand shake correction (steps S505 to S509).

In detail, the hand shake detecting unit 5 detects fluctuation of the video camera 1 due to hand shake and outputs the detected fluctuation to the rotating control amount calculating means 66A of the CPU 66, in the form of hand shake signals. Based on the hand shake signals, the rotating control amount calculating means 66A of the CPU 66 calculates a hand shake angle vector "$_{vector}\theta^{*}$" representing both fluctuation's magnitude and direction by the calculating equations (27) and (28).

Then, the rotating control amount calculating means 66A of the CPU 66 calculates the components "$\alpha_1$", "$\alpha_2$" of the rotating angle vector "$_{vector}\alpha$", based on the equations (15) to (21).

«Hand Shake Control Start Judgment Process»

Next, the hand shake control start judgment process by the hand shake control starting means 66C of the CPU 66 will be described with reference to Figs. 25 to 27.

The hand shake control starting means 66C of the CPU 66 judges whether the hand shake correction control should be started or not (steps S511 to S515).

In detail, the hand shake control starting means 66C of the CPU 66 compares the rotating angles "$\alpha_{10}$", "$\alpha_{20}$" calculated based on the rotating information of the movable prisms 10A, 10B detected by the sensors 8A, 8B with the rotating angles "$\alpha_1$", "$\alpha_2$" of the movable prisms 10A, 10B calculated by the rotating control amount calculating means 66A of the CPU 66.

Thus, when the rotating angles "$\alpha_{10}$", "$\alpha_{20}$" and the rotating angles "$\alpha_1$", "$\alpha_2$" are equal to each other (step S511) or when the absolute values of differences between the rotating angles "$\alpha_{10}$", "$\alpha_{20}$" and the rotating angles "$\alpha_1$", "$\alpha_2$" become minimum, the hand shake control starting means 66C of the CPU 66 transmits the hand shake control start signal for allowing the rotating control means 66B of the CPU 66 to start the control of the actuators 4A, 4B.

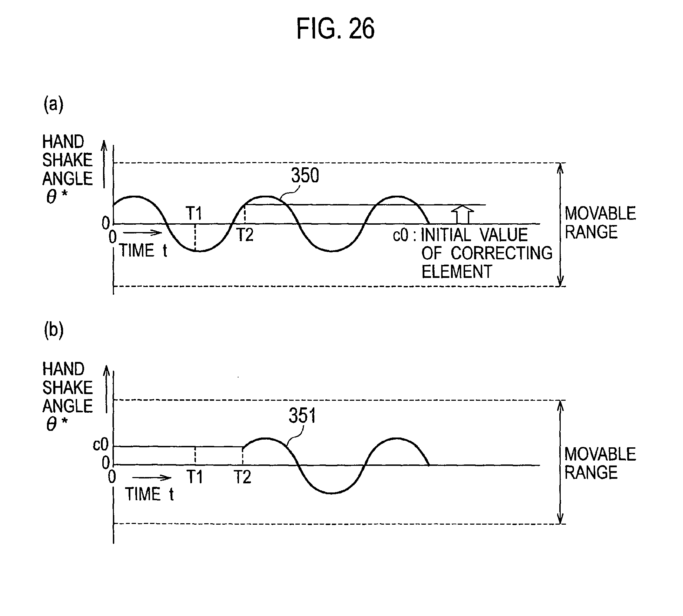

Fig. 26 includes views explaining the hand shake control start judgment process in case that the hand shake control starting means 66C of the CPU 66 judges that the rotating angles "$\alpha_{10}$", "$\alpha_{20}$" and the rotating angles "$\alpha_1$", "$\alpha_2$" are equal to each other. Fig. 26(a) shows the hand shake angle "$\theta^{*}$" with respect to a time "t", which is required for the movable prisms 10A, 10B to correct the fluctuation of an image. Fig. 26(b) shows the hand shake angle "$\theta^{*}$" under condition that the hand shake correction control is started by the image fluctuation correction device of the third embodiment.

In the image fluctuation correction device of this embodiment, as the movable prisms 10A, 10B are movable independently of each other in the vertical and horizontal directions, the hand shake angles "$\theta^*$" in the vertical and horizontal directions are calculated to carry out the hand shake start judgment process, independently of each other. For the sake of shorthand, however, Fig. 26 only illustrates the hand shake angle "$\theta^*$" in the vertical direction in charge of the movable prism 10A.

In Fig. 26(a), a hand shake angle curve 350 represents the hand shake angle "$\theta^*$" with respect to a time "t", which is required for the movable prism 10A to correct the fluctuation of an image.

At the time "T1", when receiving the hand shake correction start command signal due to an external manipulation by a user or the like, the CPU 66 starts the hand shake control start judgment process.

First of all, at the time "T1", the hand shake control starting means 66C of the CPU 66 receives the rotating information about the movable prism 10A detected by the sensor 8A thereby to obtain the value of the rotating angle "$\alpha_{10}$" corresponding to "c0". Note that "c0" designates an initial position of the movable prism 10A at the time of receiving the hand shake correction start command signal due to an external manipulation by a user or the like.

Therefore, the hand shake control starting means 66C of the CPU 66 transmits a command of calculating the hand shake angle to the rotating control amount calculating means 66A. At the time "T1" and thereafter, the rotating control amount calculating means 66A receives the hand shake signals from the hand shake detecting unit 5, and calculates the hand shake angle "$\theta^*$" based on the received hand shake angle.

In addition, at the time "T1" and thereafter, the rotating control amount calculating means 66A calculates the rotating angle "$\alpha_1$" of the prism 10A required to correct the hand shake on the basis of the calculated hand shake angle "$\theta^*$", by the equations (15) to (21).

Next, the hand shake control starting means 66C of the CPU 66 compares the rotating angle "$\alpha_{10}$", which is calculated based on the rotating information of the movable prism 10A detected by the sensor 8A, with the rotating angle "$\alpha_1$" of the prism 10A calculated by the rotating control amount calculating means 66A of the CPU 66.

In Fig. 26(a), as the hand shake angles "$\theta^*$" corresponding to the rotating angle "$\alpha_{10}$" and the rotating angle "$\alpha_1$" become "c0" at the time "T2" together, the hand shake control starting means 66C of the CPU 66 transmits the hand shake control start signal for starting the control of the actuators 4A, 4B to the rotating control means 66B of the CPU 66.

Thus, on receipt of the hand shake control start signal from the hand shake control starting means 66C, the rotating control means 66B of the CPU 66 starts the hand shake correction control.

Consequently, as shown with a hand shake correcting curve 351 of Fig. 26(b), as the hand shake correction control starts from the time "T2", the oscillation center of the hand shake correcting curve 351 agrees with the center of the movable range of the movable prism 10A, it is possible to control the rotating amount of the movable prism 10A within the movable range so that the hand shake correcting curve 351 does not exceed the movable range, appropriately.

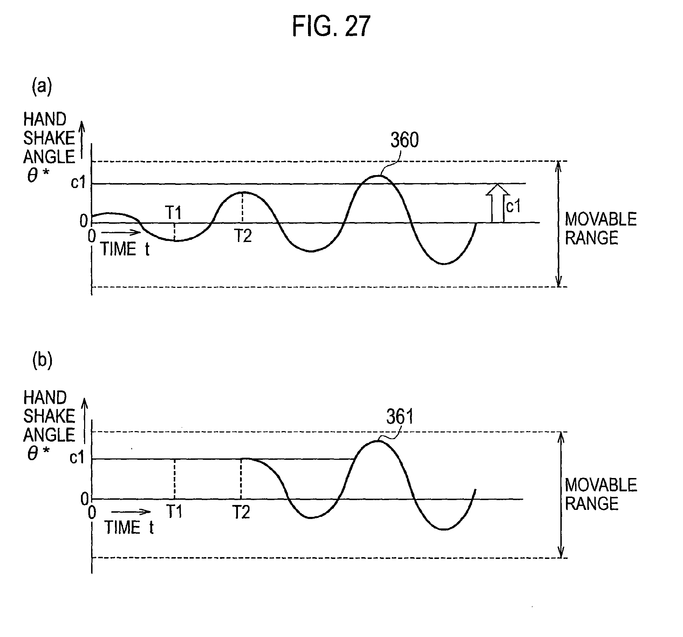

Fig. 27 includes views explaining the hand shake control start judgment process in case that the hand shake control starting means 66C of the CPU 66 judges that the absolute values of differences between the rotating angles "$\alpha_{10}$", "$\alpha_{20}$" and the rotating angles "$\alpha_1$", "$\alpha_2$" are minimum. Fig. 27(a) shows the hand shake angle "$\theta^*$" with respect to a time t, which is required for the movable prisms 10A, 10B to correct the fluctuation of an image. Fig. 27(b) shows the hand shake angle $\theta^*$ under condition that the hand shake correction control is started by the image fluctuation correction device of the third embodiment.

Note that, as similar to Fig. 26, Fig. 27 illustrates the hand shake angle curve in the vertical direction in charge of the movable prism 10A for the sake of shorthand.

In Fig. 27(a), a hand shake angle curve 360 represents the hand shake angle "$\theta^*$" with respect to a time "t", which is required for the movable prism 10A to correct the fluctuation of an image.

First, when the hand shake control starting means 66C of the CPU 66 receives the hand shake correction start command signal by an external manipulation at the time "T1", the CPU 66 starts the hand shake control start judgment process.

Then, at the time "T1", the hand shake control starting means 66C of the CPU 66 receives the rotating information about the movable prism 10A detected by the sensor 8A, thereby to obtain the value of the rotating angle "$\alpha_{10}$" corresponding to "c1".

Then, the hand shake control starting means 66C of the CPU 66 transmits a command of calculating the hand shake angle to the rotating control amount calculating means 66A. At the time "T1" and thereafter, the rotating control amount calculating means 66A receives the hand shake signals from the hand shake detecting unit 5, and calculates the hand shake angle "$\theta^*$" based on the received hand shake angle.

In addition, at the time "T1" and thereafter, the rotating control amount calculating means 66A calculates the rotating angle "$\alpha_1$" of the prism 10A required to correct the hand shake on the basis of the calculated hand shake angle "$\theta^*$", by the equations (15) to (21).

Next, the hand shake control starting means 66C of the CPU 66 compares the rotating angle "$\alpha_{10}$", which is

calculated based on the rotating information of the movable prism 10A detected by the sensor 8A, with the rotating angle "$\alpha_1$" of the prism 10A calculated by the rotating control amount calculating means 66A of the CPU 66.

Further, the rotating control amount calculating means 66A of the CPU 66 calculates the absolute value of a difference between the rotating angle "$\alpha_{10}$" and the rotating angle "$\alpha_1$", as a phase difference in the rotating angles. Further, the rotating control amount calculating means 66A stores the calculated phase difference in the rotating angles in the storage unit 24.

Next, the hand shake control starting means 66C of the CPU 66 reads the stored phase difference in the rotating angles out of the storage unit 24. If the difference between the readout phase difference in the rotating angles and a newly-calculated phase difference in the rotating angles becomes a minimum, in other words, when the absolute value of a rotating angle of the movable prism 10A calculated by the rotating control amount calculating means 66A is less than the absolute value of the rotating angle "$\alpha_{10}$" corresponding to "c1", and when the absolute value of a difference between the rotating angle "$\alpha_1$" of the movable prism 10A calculated by the rotating control amount calculating means 66A and the rotating angle "$\alpha_{10}$" corresponding to "c1" becomes a minimum, the hand shake control starting means 66C judges that the absolute value of a value of the hand shake angle "$\theta^*$" has become a minimum, and transmits a control start signal for starting the control of the two actuators 4A to the rotating control means 66B of the CPU 66.

In Fig. 27, at the time "T2", the absolute value of the hand shake angle "$\theta^*$" becomes a minimum, that is, the absolute value of a difference between the rotating angle "$\alpha_1$" of the movable prism 10A and the rotating angle "$\alpha_{10}$" corresponding to "c1" becomes a minimum. Therefore, when time has passed "T2", the hand shake control starting means 66C of the CPU 66 transmits the control start signal for starting the control of the two actuators 4A to the rotating control means 66B of the CPU 66.

Then, the rotating control means 66B of the CPU 66 starts the hand shake correction control when receiving the control start signal from the hand shake control starting means 66C.

Consequently, as shown with a hand shake correcting curve 361 of Fig. 27(b), as the hand shake correction control starts from the time "T2", the oscillation center of the hand shake correcting curve 361 is shifted toward the center of the movable range of the movable prism 10A in comparison with the situation of starting the hand shake correction control from the time "T1", it is possible to control the rotating amount of the movable prism 10A within the movable range so that the hand shake correcting curve 361 does not exceed the movable range, appropriately.

As mentioned above, after receiving the hand shake correction start command signal by an external manipulation and when the rotating amounts detected by the sensors 8A, 8B agree with the rotating control amounts calculated by the rotating control amount calculating means 66A or when the absolute values of differences between the rotating amounts and the rotating control amounts become minimums, it is performed to transmit the control start signal for starting the control of the two actuators 8A, 8B to the rotating control means 66B. As a result of the operation, as the oscillation centers of the hand shake correction amounts required for the movable prisms 10A, 10B to correct the fluctuation of an image agree with the centers of the movable ranges of the prisms 10A, 10B, it is possible to control the movable amounts of the movable prisms 10A, 10B within the movable ranges so that the correction amounts do not exceed the movable ranges, appropriately.

In the image fluctuation correction device of this embodiment, the transmission of the control start signal to the rotating control means 66B is based on the comparison of the rotating angle "$\alpha_{10}$" with the rotating angle "$\alpha_1$". Alternatively, on the premise of calculating a hand shake angle from the rotating amounts detected by the sensors 8A, 8B, the hand shake control starting means 66C may transmit the control start signal to the rotating control means 66B in accordance with the result of comparing the above hand shake angle with a hand shake angle based on the hand shake signal from the hand shake detecting unit 5, which is calculated by the rotating control amount calculating means 66A.

«Hand Shake Correction»

Next, the hand shake correcting operation of the image fluctuation correction device of this embodiment will be described.

When receiving the hand shake control start signal for starting the control of two actuators 4A, 4B from the hand shake control starting means 66C, the rotating control means 66B of the CPU 66 starts the hand shake correction control.

In detail, the hand shake detecting unit 5 detects fluctuation of the video camera 1 due to hand shake, and outputs the detected fluctuation to the rotating control amount calculating means 66A of the CPU 66, in the form of hand shake signals. Based on the received hand shake signals, the rotating control amount calculating means 66A of the CPU 66 calculates the hand shake angle vector "$\theta^*$" representing both fluctuation's magnitude and direction by the calculating equations (27) and (28).

Then, the rotating control amount calculating means 66A of the CPU 66 calculates the vector "$_{vector}\alpha$", based on the equations (15) to (21), and transmits the rotating angles "$\alpha_1$", "$\alpha_2$" as components of the calculated vector "$_{vector}\alpha$" to the rotating control means 66B. Then, the rotating control means 66B outputs the control signal to the motor drive electronic circuit 7 so that the rotating angles of the movable prisms 10A, 10B become "$\alpha_1$", "$\alpha_2$" respectively.

The motor drive electronic circuit 7 drives the actuators 4A, 4B in response to the control signals from the rotating control means 66B of the CPU 66, while the actuators 4A, 4B rotate the movable prisms 10A, 10B so that their rotating angles become "$\alpha_1$", "$\alpha_2$", respectively.

Thus, in the image fluctuation correction device of this embodiment, after receiving the hand shake control start signal from the hand shake control starting means 66D, the rotating control means 66B of the CPU 66 allows the movable prisms 10A, 10B to rotate so as to cancel the fluctuation detected by the hand shake detecting unit 5, whereby the fluctuation of an image due to hand shake is corrected.

((Variation of 3$^{rd}$. Embodiment»

<Variation 3-1>

According to the third embodiment, the image fluctuation correction device is constructed so as to transmit the hand shake control start signal for starting the control of two actuators 4A, 4B to the rotating control means 66B when the rotating amounts detected by the sensors 8A, 8B agree with the rotating control amounts calculated by the rotating control amount calculating means 66A or when the absolute values of differences between the rotating amounts and the rotating control amounts become minimums. On the contrary, according to the variation 3-1, the image fluctuation correction device is constructed so as to transmit the hand shake control start signal for starting the control of two actuators 4A, 4B to the rotating control means 66B when the absolute values of differences between the rotating amounts detected by the sensors 8A, 8B and the rotating control amounts calculated by the rotating control amount calculating means 66A are within a predetermined rotating-angle allowable range or when the absolute values of differences between the rotating amounts and the rotating control amounts become minimums.

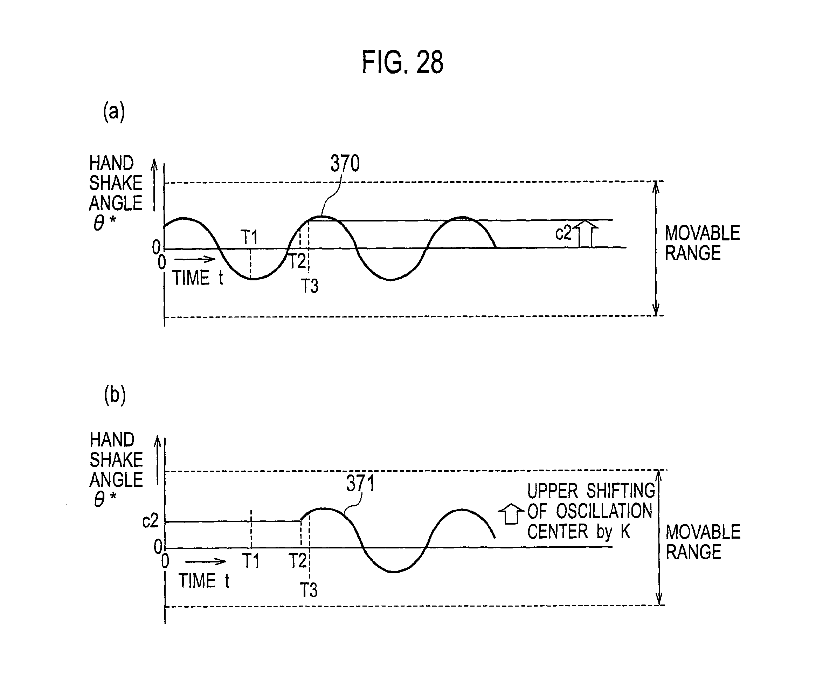

Fig. 28 includes views explaining the hand shake control start judgment process in case that the hand shake control starting means 66C of the CPU 66 judges that the absolute values of differences between the rotating angles "$\alpha_{10}$", "$\alpha_{20}$" and the rotating angles "$\alpha_1$", "$\alpha_2$" are within the predetermined allowable range. Fig. 28(a) shows the hand shake angle "$\theta^*$" with respect to a time "t", which is required for the movable prisms 10A, 10B to correct the fluctuation of an image. Fig. 28(b) shows the hand shake angle "$\theta^*$" under condition that the hand shake correction control is started by the image fluctuation correction device of the third embodiment

Note that, as similar to Fig. 26, Fig. 28 illustrates the hand shake angle "$\theta^*$" in the vertical direction in charge of the movable prism 10A for the sake of shorthand.

In Fig. 28(a), a hand shake angle curve 370 represents the hand shake angle "$\theta^*$" with respect to a time "t", which is required for the movable prism 10A to correct the fluctuation of an image.

When receiving the hand shake correction start command signal due to an external manipulation by a user or the like at the time "T1", the CPU 66 starts the hand shake control start judgment process.

First, at the time T1, the hand shake control starting means 66C of the CPU 66 receives the rotating information about the movable prism 10A detected by the sensor 8A, thereby to obtain the value of the rotating angle "$\alpha_{10}$" corresponding to "c2".

Then, the hand shake control starting means 66C of the CPU 66 transmits a command of calculating the hand shake angle to the rotating control amount calculating means 66A. At the time "T1" and thereafter, the rotating control amount calculating means 66A receives the hand shake signals from the hand shake detecting unit 5, and calculates the hand shake angle "$\theta^*$" based on the received hand shake angle, by the equations (15) to (21).

In addition, at the time "T1" and thereafter, the rotating control amount calculating means 66A calculates the rotating angle "$\alpha_1$" of the prism 10A required to correct the hand shake on the basis of the calculated hand shake angle "$\theta^*$".

Next, the hand shake control starting means 66C of the CPU 66 compares the absolute value of a difference between the rotating angle "$\alpha_{10}$" calculated based on the rotating information of the movable prism 10A detected by the sensor 8A and the rotating angle "$\alpha_1$" of the prism 10A calculated by the rotating control amount calculating means 66A of the CPU 66 with a rotating-angle allowable range "K" read out of the storage unit 24.

Then, as the absolute value of the difference between the rotating angle $\alpha_{10}$ and the rotating angle "$\alpha_1$" becomes less than the rotating-angle allowable range "K" at the time "T2", the hand shake control starting means 66C of the CPU 66 transmits the control start signal for starting the control of the actuators 4A, 4B to the rotating control means 66B of the CPU 66.

The value of the rotating-angle allowable range "K" constitutes a condition for starting the hand shake correction control, and is established depending on how much deviations of the movable ranges of the movable prisms 10A, 10B from the hand shake correction ranges should be permitted. The larger this value of the rotating-angle allowable range "K" gets, the earlier the hand shake correction control is started since the acceptance of the hand shake correction start command signal through a user's manipulating of push buttons etc. Conversely, the smaller the value of the allowable range "K" gets, the smaller respective distances between the oscillation centers of the hand shake correction amounts required for the movable prisms 10A, 10B to correct the fluctuation of an image and the centers of the movable ranges of the prisms 10A, 10B do become. In such a case, it becomes difficult for the hand shake correction amounts to exceed the movable ranges of the movable prisms 10A, 10B.

Note that this rotating angle allowable range "K" is previously established by an image fluctuation correction device's provider or the like, and is stored in the storage unit 24.

Consequently, as shown with a hand shake correction curve 371 of Fig. 28(b), as the hand shake correction control is started since the time "T2", it is possible to start the hand shake correction control earlier than the image fluctuation correction device of the third embodiment, by a period corresponding to the rotating-angle allowable range "K".

In common with the first to the third embodiments, the image fluctuation correction device is constructed so as to correct the fluctuation of an image by using the movable prisms optically. However, the present invention is also applicable to the other optical image fluctuation correction devices and an image fluctuation correction device for correcting the fluctuation of an image electronically.

For instance, there exists an electronic image fluctuation correction device which electronically corrects the fluctuation of an image by shifting CCD's imaging cutout area. Further, as the other optical image fluctuation correction devices besides the above device using the movable prisms, there are an image fluctuation correction device capable of moving a lens in an optical system or CCD vertically to the optical axis, an image fluctuation correction device capable of changing the angles of liquid prisms and so on.

As for the shake detecting means, there are known a method of detecting angular acceleration or angular velocity by using a gyro instrument, a vector detecting method of detecting a shake from the movement of an image and so on.

The above-mentioned image fluctuation correction device in each case (optical or electronic) can perform the image fluctuation correction by the control amount calculating means' calculating of a control amount based on the information provided by the shake detecting means and the device's controlling of the drive means on the ground of the calculated control amount and the driving amount detected by the driving amount detecting means.

Therefore, it is common in each case (optical or electronic) that the shake detecting means detects the fluctuation of an image. It is noted that the above-constructed image fluctuation correction device detecting the control amount calculating means is identical to a known image fluctuation correction device installed in an actual equipment

The hand shake control starting means of the present invention is applicable to all of these image fluctuation correction devices, irrespective of the same means was operated electronically or optically.

## MUSTRIALAPPLICABELITY

According to the image fluctuation correction device of the present invention, the displacements of the movable refraction elements required to correct the fluctuation of an image can be controlled without exceeding their movable ranges, but within the movable ranges appropriately.

## Claims

1. An image fluctuation correction device that corrects a fluctuation of an image caused by an on-camera shake of an imaging equipment having an optical lens, the image fluctuation correction device comprising:

   shake detecting means for detecting a shake generated in the imaging equipment;
   image moving means for moving an image brought by light being incident on the optical lens;
   driving means for driving the image moving means;
   control amount calculating means for calculating a control amount to drive the driving means so as to cancel the shake detected by the shake detecting means;
   control means for controlling the driving means based on the control amount calculated by the control amount calculating means;
   driving amount detecting means for detecting a driving amount of the image moving means;
   reverse rotating control means that computes a reverse rotating control amount by subtracting a difference between the control amount and a control limit amount representing a control amount of the image moving means at its movable limit from the control limit amount, and controls the driving means based on the reverse rotating control amount; and
   control switching means that transmits a reverse rotating control start signal to the reverse rotating control means thereby to start a reverse rotating control of the driving means when judging that the driving amount detected by the driving amount detecting means has reached the control limit amount, and that transmits a hand shake control start signal to the control means thereby to start a control of the driving means when judging, while the driving means is controlled by the reverse rotating control means, that the control amount calculated by the control amount calculating means has agreed with a control amount calculated immediately before.

2. An image fluctuation correction device that corrects a fluctuation of an image caused by an on-camera shake of an imaging equipment having an optical lens, the image fluctuation correction device comprising:

shake detecting means for detecting a shake generated in the imaging equipment;
two movable refraction elements arranged on an incident light path toward the optical lens to change a refracting direction of light being incident on the optical lens;
two rotating means for rotating the two movable refraction elements about an optical axis respectively;
rotating control amount calculating means for calculating rotating control amounts of the two rotating means so as to cancel the shake detected by the shake detecting means;
rotating control means for controlling the two rotating means based on the rotating control amounts calculated by the rotating control amount calculating means;
rotating amount detecting means for detecting rotating amounts of the two movable refraction elements;
reverse rotating control means that computes reverse rotating control amounts by subtracting differences between the rotating control amounts and rotating limit amounts representing rotating amounts of the two movable refraction elements at their movable limits from the rotating limit amounts, and controls the two rotating means based on the reverse rotating control amounts; and
control switching means that transmits a reverse rotating control start signal to the reverse rotating control means thereby to start a reverse rotating control of the rotating means when judging that the rotating amounts detected by the rotating amount detecting means have reached the rotating limit amounts, and that transmits a hand shake control start signal to the rotating control means thereby to start a control of the rotating means when judging, while the two rotating means are controlled by the reverse rotating control means, that the rotating control amounts calculated by the rotating control amount calculating means have agreed with rotating control amounts calculated immediately before.

3. The image fluctuation correction device of claim 2, wherein
the control switching means judges that the rotating amounts have reached the rotating limit amounts when there are differences between the rotating control amounts calculated by the rotating control amount calculating means and the rotating control amounts calculated immediately before and additionally, the rotating amounts detected by the rotating amount detecting means agree with the rotating amounts detected immediately before.

4. An image fluctuation correction device that corrects a fluctuation of an image caused by an on-camera shake of an imaging equipment having an optical lens, the image fluctuation correction device comprising:

shake detecting means for detecting a shake generated in the imaging equipment;
image moving means for moving an image brought by light being incident on the optical lens;
driving means for driving the image moving means;
control amount calculating means for calculating a control amount to drive the driving means so as to cancel the shake detected by the shake detecting means;
control means for controlling the driving means based on the control amount calculated by the control amount calculating means;
driving amount detecting means for detecting a driving amount of the image moving means;
initial control means that calculates a control-amount start set value based on an amplitude of the control amount in a predetermined period calculated by the control amount calculating means, and initially controls the driving means so that the driving amount detected by the driving amount detecting means becomes equal to the control-amount start set value; and
hand shake control starting means that transmits an initial control start signal to the initial control means thereby to start an initial control of the driving means after receiving a hand shake correction start command signal by an external manipulation, and that transmits a hand shake control start signal to the control means thereby to start a control of the driving means when the control amount calculated by the control amount calculating means becomes equal to the control-amount start set value calculated by the initial control means.

5. An image fluctuation correction device that corrects a fluctuation of an image caused by an on-camera shake of an imaging equipment having an optical lens, the image fluctuation correction device comprising:

shake detecting means for detecting a shake generated in the imaging equipment;

two movable refraction elements arranged on an incident light path toward the optical lens to change a refracting direction of light being incident on the optical lens;

two rotating means for rotating the two movable refraction elements about an optical axis respectively;

rotating control amount calculating means for calculating rotating control amounts of the two rotating means so as to cancel the shake detected by the shake detecting means;

rotating control means for controlling the two rotating means based on the rotating control amounts calculated by the rotating control amount calculating means;

rotating amount detecting means for detecting rotating amounts of the two movable refraction elements;

initial control means that calculates an amplitude of the rotating control amount from both maximum and minimum values of the control amount in a predetermined period calculated by the rotating control amount calculating means, multiplies a predetermined set-value amplitude multiple number by the calculated amplitude thereby to calculate a rotating-amount start set value, and initially controls the rotating means so that the rotating amounts detected by the rotating amount detecting means become equal to the rotating-amount start set value; and

hand shake control starting means that transmits an initial control start signal to the initial control means thereby to start an initial control of the rotating means after receiving a hand shake correction start command signal by an external manipulation, and that transmits a hand shake control start signal to the rotating control means thereby to start a control of the rotating means when the rotating control amounts calculated by the rotating control amount calculating means become equal to the rotating-amount start set value calculated by the initial control means.

6. An image fluctuation correction device that corrects a fluctuation of an image caused by an on-camera shake of an imaging equipment having an optical lens, the image fluctuation correction device comprising:

shake detecting means for detecting a shake generated in the imaging equipment;

image moving means for moving an image brought by light being incident on the optical lens;

driving means for driving the image moving means;

control amount calculating means for calculating a control amount to drive the driving means so as to cancel the shake detected by the shake detecting means;

control means for controlling the driving means based on the control amount calculated by the control amount calculating means;

driving amount detecting means for detecting a driving amount of the image moving means; and

hand shake control starting means that receives a hand shake correction start command signal by an external manipulation and then transmits a hand shake control start signal to the control means thereby to start a control of the driving means when an absolute value of a difference between the driving amount detected by the driving amount detecting means and the control amount calculated by the control amount calculating means is within a predetermined range or when the absolute value of the difference between the driving amount and the control amount becomes minimum.

7. An image fluctuation correction device that corrects a fluctuation of an image caused by an on-camera shake of an imaging equipment having an optical lens, the image fluctuation correction device comprising:

shake detecting means for detecting a shake generated in the imaging equipment;

two movable refraction elements arranged on an incident light path toward the optical lens to change a refracting direction of light being incident on the optical lens;

two rotating means for rotating the two movable refraction elements about an optical axis respectively;

rotating control amount calculating means for calculating rotating control amounts of the two rotating means so as to cancel the shake detected by the shake detecting means;

rotating control means for controlling the two rotating means based on the rotating control amounts calculated by the rotating control amount calculating means;

rotating amount detecting means for detecting rotating amounts of the two movable refraction elements; and

hand shake control starting means that receives a hand shake correction start command signal by an external manipulation and then transmits a hand shake control start signal to the rotating control means thereby to start a control of the two rotating means when the rotating amounts detected by the rotating amount detecting means agree with the rotating control amounts calculated by the rotating control amount calculating means or when absolute values of differences between the rotating amounts and the rotating control amounts become minimum.

8. An image fluctuation correction device that corrects a fluctuation of an image caused by an on-camera shake of an imaging equipment having an optical lens, the image fluctuation correction device comprising:

shake detecting means for detecting a shake generated in the imaging equipment;

two movable refraction elements arranged on an incident light path toward the optical lens to change a refracting direction of light being incident on the optical lens;

two rotating means for rotating the two movable refraction elements about an optical axis respectively;

rotating control amount calculating means for calculating rotating control amounts of the two rotating means so as to cancel the shake detected by the shake detecting means;

rotating control means for controlling the two rotating means based on the rotating control amounts calculated by the rotating control amount calculating means;

rotating amount detecting means for detecting rotating amounts of the two movable refraction elements; and

hand shake control starting means that receives a hand shake correction start command signal by an external manipulation and then transmits a hand shake control start signal to the rotating control means thereby to start a control of the two rotating means when absolute values of differences between the rotating amounts detected by the rotating amount detecting means and the rotating control amounts calculated by the rotating control amount calculating means are within a predetermined range or when the absolute values of differences between the rotating amounts and the rotating control amounts become minimum.

## FIG. 1

EP 2 028 540 A1

# FIG. 2

(a)

(b)

# FIG. 3

(a)

(b)

(c)

# FIG. 4

# FIG. 5

(a)

(b)

(c)

EP 2 028 540 A1

FIG. 6

(a)

(b)

# FIG. 7

$$\theta_1 = -(\theta_2 + \theta_3)$$

# FIG. 8

(a)

ROTATION OF
MOVABLE PRISM 10A

$\alpha 1$

$\theta a$

$\theta 2$

$\theta '2$

$\theta '3$

$\alpha 2$

$\theta 3$

$\theta b$

ROTATION
OF MOVABLE
PRISM 10B

A

(b)

$\theta X$

A'

$\theta b$

$\theta$

$\theta Y$

PARALLEL
TRANSLATION

A

$\theta a$

# FIG. 9

(a)

(b)

(c)

(d)

# FIG. 10

(a)

(b)

# FIG. 11

(a)

RELATIVE ROTATING DIRECTION OF SUBJECT

(b)

CORRECTING DIRECTION OF SUBJECT ROTATION

## FIG. 12

START

S101
RECEIVING OF
HAND SHAKE CONTROL START
SIGNAL ?
NO

YES

RECEIVING OF HAND SHAKE SIGNAL FROM
HAND SHAKE DETECTING UNIT ──S103

CALCULATING OF HAND SHAKE ANGLE $\theta *$ ──S105

CALCULATING OF PRISM ANGLE ──S107

TRANSMITTING OF CONTROL SIGNAL BASED
ON CALCULATED PRISM ANGLE ──S109

S111
RECEIVING OF
HAND SHAKE CONTROL STOP
SIGNAL ?
NO

YES

END

# FIG. 13

START

UNDER HAND
SHAKE CONTROL CONDITION ? — S201 — NO

YES

CALCULATING OF MEASURED PRISM ANGLE — S203

RECEIVING OF PRISM ANGLE — S205

IS TEMPORAL
CHANGE IN PRISM ANGLE ? — S207 — NO

YES

IS TEMPORAL
CHANGE IN MEASURED PRISM
ANGLE ? — S209 — YES

NO

STORING OF ROTATING LIMIT AMOUNT — S211

TRANSMITTING OF HAND SHAKE CONTROL STOP SIGNAL — S213

TRANSMITTING OF REVERSE ROTATING CONTROL
START SIGNAL — S215

RECEIVING OF PRISM ANGLE — S217

IS TEMPORAL
CHANGE IN PRISM ANGLE ? — S219 — YES

NO

TRANSMITTING OF REVERSE ROTATING CONTROL
STOP SIGNAL — S221

TRANSMITTING OF HAND SHAKE CONTROL
START SIGNAL — S223

END

FIG. 14

```
                    ┌─────────┐
                    │  START  │
                    └─────────┘
                         │
                         ▼
                   ╱           ╲          S301
              ╱   RECEIVING OF    ╲
         ◄───  REVERSE ROTATING CONTROL START  ───  NO
              ╲      SIGNAL ?     ╱
                   ╲           ╱
                        │
                       YES
                         │
                         ▼
    ┌──────────────────────────────────────────┐
    │ RECEIVING OF HAND SHAKE SIGNAL FROM HAND  │── S303
    │ SHAKE DETECTING UNIT                      │
    └──────────────────────────────────────────┘
                         │
                         ▼
    ┌──────────────────────────────────────────┐
    │ CALCULATING OF HAND SHAKE ANGLE  θ *      │── S305
    └──────────────────────────────────────────┘
                         │
                         ▼
    ┌──────────────────────────────────────────┐
    │ CALCULATING OF PRISM ANGLE                │── S307
    └──────────────────────────────────────────┘
                         │
                         ▼
    ┌──────────────────────────────────────────┐
    │ CALCULATING OF REVERSE PRISM ANGLE        │── S309
    └──────────────────────────────────────────┘
                         │
                         ▼
    ┌──────────────────────────────────────────┐
    │ TRANSMITTING OF CONTROL SIGNAL BASED ON   │── S311
    │ CALCULATED REVERSE PRISM ANGLE            │
    └──────────────────────────────────────────┘
                         │
                         ▼
                   ╱           ╲          S313
              ╱   RECEIVING OF    ╲
         ◄───  REVERSE ROTATING CONTROL STOP  ───  NO
              ╲      SIGNAL ?     ╱
                   ╲           ╱
                        │
                       YES
                         │
                         ▼
                    ┌─────────┐
                    │   END   │
                    └─────────┘
```

# FIG. 15

(a)

(b)

FIG. 16

EP 2 028 540 A1

# FIG. 17

(a)

13

3

2

3a    3b    3c    3d

16

(b)

13

3

2

3a    3b    3c    3d

16

# FIG. 18

(a)

(b)

(c)

# FIG. 19

(a)

(b)

(c)

# FIG. 20

(a)

(b)

10A

1a

10Aa

10Ab

(c)

N = 1.5

N = 1.4

17

# FIG. 21

VIDEO
SIGNAL

EP 2 028 540 A1

## FIG. 22

```
        ( START )
            |
            v
        <---------------------------------------
        /      S401      \              NO
   <    RECEIVING OF HAND                >------>
        SHAKE CORRECTION START COMMAND
        \        SIGNAL ?               /
            |
            | YES
            v
   | RECEIVING OF MEASURED PRISM ANGLE FROM SENSOR |---- S403
            |
            v
   <--------------------------------------------
   | RECEIVING OF HAND SHAKE SIGNAL FROM HAND SHAKE |---- S405
   | DETECTING UNIT                                 |
            |
            v
   | CALCULATING OF HAND SHAKE ANGLE  θ *  |---- S407
            |
            v
   | CALCULATING OF PRISM ANGLE |---- S409
            |
            v
        /       S411          \         NO
   <    HAS PREDETERMINED TIME PASSED ?  >------>
        \                     /
            |
            | YES
            v
   | TRANSMITTING OF INITIAL CONTROL START SIGNAL |---- S413
            |
            v
   | DETECTING OF MAX. MIN. FROM PRISM ANGLE |---- S415
            |
            v
   | CALCULATING OF ROTATING-AMOUNT START SET VALUE  Δ |---- S417
            |
            v
   | TURNING OF PRISM UNTIL MEASURED PRISM ANGLE       |---- S419
   | BECOMES EQUAL TO ROTATING-AMOUNT START SET VALUE  |
            |
            v
   <--------------------------------------------
   | RECEIVING OF HAND SHAKE SIGNAL FROM HAND SHAKE |---- S421
   | DETECTING UNIT                                 |
            |
            v
   | CALCULATING OF HAND SHAKE ANGLE  θ *  |---- S423
            |
            v
   | CALCULATING OF PRISM ANGLE |---- S425
            |
            v
        /      PRISM ANGLE =        S427  \   NO
   <    ROTATING-AMOUNT START SET VALUE ?  >----->
        \                                 /
            |
            | YES
            v
   | TRANSMITTING OF HAND SHAKE CONTROL START SIGNAL |---- S429
            |
            v
        (  END  )
```

# FIG. 23

(a)

HAND SHAKE ANGLE θ*

250

TIME t

ROTATING-AMOUNT START SET VALUE Δ

MOVABLE RANGE

0   T1        T2  T4

(b)

HAND SHAKE ANGLE θ*

c0

251

Δ
0

TIME t

MOVABLE RANGE

0   T1                T2  T3
                          T4

# FIG. 24

EP 2 028 540 A1

## FIG. 25

```
                    ( START )
                        │
                        ▼
              S501 ╱╲
            ╱           ╲
          ╱   RECEIVING OF  ╲        NO
        ╱  HAND SHAKE CORRECTION ╲───────┐
          ╲  START COMMAND   ╱            │
            ╲   SIGNAL?   ╱               │
              ╲        ╱                  │
                ╲  ╱                      │
                 │ YES                    │
                 ▼                        │
      ┌──────────────────────┐           │
      │ RECEIVING OF MEASURED PRISM │ ─S503 │
      │ ANGLE FROM SENSOR    │           │
      └──────────────────────┘           │
                 │ ◄───────────────────────────────────┐
                 ▼                        │             │
      ┌──────────────────────┐           │             │
      │ RECEIVING OF HAND SHAKE SIGNAL │─S505           │
      │ FROM HAND SHAKE DETECTING UNIT │                │
      └──────────────────────┘                          │
                 │                                       │
                 ▼                                       │
      ┌──────────────────────┐                          │
      │ CALCULATING OF HAND SHAKE │ ─S507                │
      │ ANGLE  θ *           │                          │
      └──────────────────────┘                          │
                 │                                       │
                 ▼                                       │
      ┌──────────────────────┐                          │
      │ CALCULATING OF PRISM ANGLE │─S509                │
      └──────────────────────┘                          │
                 │                                       │
                 ▼                                       │
              S511 ╱╲                                   │
            ╱        ╲                                  │
          ╱ CALCULATED ╲          NO                    │
        ╱ PRISM ANGLE = MEASURED ╲──────┐               │
          ╲ PRISM ANGLE ? ╱             │               │
            ╲        ╱                  ▼               │
                │ YES            S513 ╱╲               │
                │              ╱           ╲            │
                │            ╱  IS │CALCULATED PRISM ╲  NO
                │          ╱  ANGLE-MEASURED PRISM ANGLE│───┘
                │            ╲   MINIMUM ?   ╱
                │              ╲           ╱
                │                ╲  ╱
                │                 │ YES
                │ ◄───────────────┘
                ▼
      ┌──────────────────────┐
      │ TRANSMITTING OF HAND SHAKE │─S515
      │ CONTROL START SIGNAL │
      └──────────────────────┘
                 │
                 ▼
              ( END )
```

# FIG. 26

(a)

(b)

# FIG. 27

(a)

(b)

# FIG. 28

(a)

HAND
SHAKE
ANGLE
$\theta *$

370

T1

T2

T3

0

TIME t

c2

MOVABLE
RANGE

(b)

HAND
SHAKE
ANGLE
$\theta *$

371

c2

0

T1

T2

T3

TIME t

UPPER SHIFTING
OF OSCILLATION
CENTER by K

MOVABLE
RANGE

EP 2 028 540 A1

<table>
<tr><td colspan="2" align="center">**INTERNATIONAL SEARCH REPORT**</td><td>International application No.<br>PCT/JP2007/059660</td></tr>
</table>

| A. CLASSIFICATION OF SUBJECT MATTER |
|---|
| *G03B5/00*(2006.01)i |
| According to International Patent Classification (IPC) or to both national classification and IPC |

| B. FIELDS SEARCHED |
|---|
| Minimum documentation searched (classification system followed by classification symbols)<br>G03B5/00 |
| Documentation searched other than minimum documentation to the extent that such documents are included in the fields searched<br>Jitsuyo Shinan Koho    1922-1996   Jitsuyo Shinan Toroku Koho   1996-2007<br>Kokai Jitsuyo Shinan Koho   1971-2007   Toroku Jitsuyo Shinan Koho   1994-2007 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| Y<br>A | JP 3-094214 A (Asahi Optical Co., Ltd.),<br>19 April, 1991 (19.04.91),<br>Page 3, lower left column, line 4 to page 4,<br>lower left column, line 11; Fig. 1<br>& US 5461513 A     & GB 2235788 A<br>& DE 4028359 A | 6-8<br>1-5 |
| Y<br>A | JP 9-051469 A (Sony Corp.),<br>18 February, 1997 (18.02.97),<br>Par. Nos. [0042] to [0050]<br>& AU 9654640 A     & US 5768634 A | 6-8<br>1-5 |
| A | JP 63-169614 A (Opt, Inc.),<br>13 July, 1988 (13.07.88),<br>Page 2, upper right column, line 20 to page 4,<br>lower right column, line 7; Figs. 2 to 4<br>(Family: none) | 1-8 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>31 July, 2007 (31.07.07) | Date of mailing of the international search report<br>14 August, 2007 (14.08.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/059660 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 8-240831 A (Canon Inc.), 17 September, 1996 (17.09.96), Par. Nos. [0038] to [0163]; Figs. 1 to 14 & US 6343188 B1 | 1-8 |

Form PCT/ISA/210 (continuation of second sheet) (April 2005)

## INTERNATIONAL SEARCH REPORT

International application No.

PCT/JP2007/059660

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:
   see extract sheet

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

| **INTERNATIONAL SEARCH REPORT** | International application No. |
|---|---|
| | PCT/JP2007/059660 |

Continuation of Box No.III of continuation of first sheet(2)

For the reasons below, this international application contains three inventions not satisfying the requirement of unity of invention.
Main invention: "claims 1-3"
Second invention: "claims 4-5"
Third invention: "claims 6-8"

The matter common to the main, second, and third inventions is "an image blur correcting device comprising shake detecting means for detecting shake of an imaging device, image moving means (or two movable refraction elements), drive means for driving image moving means (or turning means for turning movable refraction elements), control value computing means (or turning control value computing means), control means (or turning control means), and drive value detecting means (or turning value detecting means)".

However, the international search has revealed that this common matter is not novel since it is disclosed in document JP 3-094214 A (Asahi Optical Co., Ltd.), 19 April, 1991 (19.04.91), Page 3, lower left column, line 4 to page 4, lower left column, line 11; Fig. 1

Therefore, since the common matter makes no contribution over the prior art, this common matter cannot be "a special technical feature" within the meaning of PCT Rule 13.2, second sentence.

No technical relationship among the second and third inventions involving one or more of the same or corresponding special technical features can be seen.

**REFERENCES CITED IN THE DESCRIPTION**

**Patent documents cited in the description**

- JP 9051469 A

- JP 2752115 B